# EUROPEAN PATENT SPECIFICATION

(11) **EP 4 381 033 B1**
(45) Date of publication and mention of the grant of the patent: **16.10.2024**
(21) Application number: 23751596.0
(22) Date of filing: 01.08.2023
(51) Int. Cl.: C10M 145/14

(54) **POLYALKYL (METH)ACRYLATE-BASED POLYMERS WITH IMPROVED LOW TEMPERATURE PROPERTIES**
POLYMERE AUF BASIS VON POLYALKYL(METH)ACRYLAT MIT VERBESSERTEN TIEFTEMPERATUREIGENSCHAFTEN
POLYMÈRES À BASE DE (MÉTH)ACRYLATE DE POLYALKYLE AYANT DES PROPRIÉTÉS AMÉLIORÉES À BASSE TEMPÉRATURE

(30) Priority: 08.08.2022 EP 22189225
(43) Date of publication of application: 12.06.2024
(73) Proprietor: Evonik Operations GmbH, 45128 Essen (DE)
(72) Inventor: MARKWART, Jens Christian, 65527 Niedernhausen (DE); EISENBERG, Boris, 64646 Heppenheim (DE); BRAUM, Manfred, 55126 Mainz (DE); JANßEN, Dieter, 64823 Groß-Umstadt (DE); HILF, Stefan, 64673 Zwingenberg (DE)
(74) Representative: Evonik Patent Association
(86) International application number: PCT/EP2023/071264
(87) International publication number: WO 2024/033156

(56) References cited:
- WO-A1-2019/012031
- US-A1- 2010 190 671
- US-A1- 2019 203 148

## Description

The present invention is directed to polyalkyl(meth)acrylate-based polymers comprising defined amounts of long-chain alkyl (meth)acrylates, their preparation, lubricant compositions comprising such polymers and their use to improve the thickening efficiency and low temperature performance of lubricant compositions, especially of engine oil (EO) compositions.

### State of the art

Polyalkyl(meth)acrylate-based polymers are well known in the art to be efficient VI improvers.

US 5,565,130 discloses comb polymers and their use as viscosity index improvers. The working examples comprise 10-80% of macromonomer and 20-90% of C1-10 alkyl (meth)acrylates which show molecular weights Mw in the range of 119.000 to 325.000 g/mol. An effect of the presented comb polymers on thickening efficiency and low temperature performance is not disclosed therein.

WO 2007/003238 A1 describes oil-soluble comb polymers based on polyolefin-based macromonomers, especially polybutadiene-based methacrylic esters, and C1-C10 alkyl methacrylates. The working examples comprise 37.2-53.3% of macromonomer, 12.3-61% of C1-4 alkyl (meth)acrylates and 12-42.6% of styrene. The weight-average molecular weight Mw of the working examples is in the range of 79.000 to 402.000 g/mol and D varies from 3.7 to 16.6. The comb polymers can be used as an additive for lubricant oils to improve the viscosity index and shear stability. However, an effect of the presented comb polymers on thickening efficiency and low temperature performance is not disclosed therein.

US 2010/0190671 discloses the use of comb polymers based on polyolefin-based macromonomers, especially polybutadiene-based methacrylic esters, and C1-C10 alkyl methacrylates for improving the fuel consumption of motor vehicles. The weight-average molecular weight Mw of the working examples is in the range of 191.000 to 374.000 g/mol and D varies between 3.5 and 4.5. However, an effect of the presented comb polymers on low temperature performance is not disclosed therein.

WO 2018/041755 A1 is directed to selected comb polymers comprising specified amounts of macromonomer and alkyl acrylates. The presence of 0.5% to 11% by weight of C4-18 alkyl acrylates have a positive impact on the Noack volatility of lubricating compositions comprising such comb polymers. However, an effect of the presented comb polymers on low temperature performance is not disclosed therein.

WO 2019/012031 is directed to comb polymers comprising an imide functionality and their use for reducing wear and fuel consumption of engine oil compositions. An effect of the presented comb polymers on low temperature performance is not disclosed therein.

EP 3 839 017 A1 relates to polyalkyl(alk)acrylate comb polymers comprising at least 21 wt.% of C12-24 alkyl (alk)acrylate ester monomers. However, an effect of the presented comb polymers on low temperature performance is not disclosed therein.

Lubricating oils need to have a sufficiently high viscosity under operating temperatures in order to prevent damage to the machinery or equipment. Since the viscosity of liquids depends strongly on temperature, special focus is set to guarantee a minimum viscosity at the maximum high temperature. These viscosities are often specified as e.g. minimum kinematic viscosity at 100°C (KV100) and/or minimum high temperature high shear viscosity at 150°C (HTHS150).

While it is theoretically possible in most cases to adjust lubricant viscosity to the required minimum values at high temperatures by simply blending lighter and heavier base oils, the resulting lubricant would not assure a save and good operation of the equipment under cold start-up conditions. Mineral base oils contain a certain amount of paraffinic species, which tend to form wax crystals and precipitate at low temperatures. Heavier base oils contain more wax than lighter oils and high usage of waxy base oil components results in too poor low temperature fluidity.

Pour point depressants (PPDs) are being used to partly mitigate the negative effects caused by paraffin crystallization, but this alone is typically not sufficient to meet viscosity requirements at low and high temperature. Therefore, the viscosity of lubricants is often adjusted by addition of viscosity index improvers (Vlls), also called viscosity modifiers (VM).

A lighter base oil with sufficient low temperature fluidity is thickened with a VM to the desired high temperature values. At high temperatures, the polymer molecules uncoil whereas their hydrodynamic volume increases resulting in a greater thickening effect. At lower temperatures, the same polymer chain coils leading to a smaller thickening effect. This minimizes parasitic energy losses caused by the lubricant and e.g. the engine efficiency is higher whilst fuel consumption is lower.

At high temperatures, the lubricant has a corresponding viscosity and forms a thicker oil film providing better lubricity (= lower friction) as well as good wear protection. However, great care must be taken to select a suitable VM, because it should have sufficient shear stability to withstand mechanical stress. Otherwise, it would result in undesired viscosity loss and again too low viscosity of the lubricant. The combined use of light base oil, heavier base oil, one or more PPD(s) and a VM besides other additives in a lubricant is well known to those skilled in the art. It is also a well-known and recognized fact that an increasing number of additives and components increases the cost of the resulting lubricant. And it is not only the simple componentry-cost of the individual additive that adds up, but it also leads to high complexity in operations to blend these lubricants, further adding to cost. Therefore, every lubricant formulator seeks to maximize the use of heavier base oil, while minimizing the use of other additives.

It was an object of the present invention to combine the properties of a viscosity modifier with that of a pour point depressant in one molecule, while maintaining all desirable properties of the viscosity modifier such as VI-lift properties (both on high and low-shear viscometrics), shear stability and good low temperature performance. Goal was to formulate high-tier multi-purpose lubricants fulfilling a set of demanding gear and engine oil viscosity specifications with a slate of mineral base oils and a viscosity modifier without additional need of one or more PPD(s).

It was now surprisingly found that polyalkyl(meth)acrylate-based polymers comprising a certain amount of long-chain alkyl (meth)acrylates lead to improved low temperature performance of lubricant compositions, especially of engine oil (EO) compositions.

### Detailed description of the invention

A first object of the present invention is directed to polyalkyl(meth)acrylate-based polymers, comprising the following monomers:
(a) 5 wt.% to 15 wt.% of esters of (meth)acrylic acid and a hydroxylated hydrogenated polybutadiene;
(b) 0 wt.% to 2 wt.% of methyl methacrylate;
(c) 45 wt.% to 80 wt.% of n-butyl methacrylate;
(d) 0 wt.% to 20 wt.% of C5-11 alkyl methacrylates, preferably iso-decyl methacrylate;
(e) 0.2 wt.% to 18 wt.% of C12-15 alkyl methacrylates, preferably C12-14 alkyl methacrylates;
(f) 2 wt.% to 19.8 wt.% of C16-20 alkyl methacrylates, preferably stearyl methacrylate; and
(g) 0 wt.% to 2 wt.% of styrene monomers,
wherein the sum of components (e) and (f) is equal to or less than 20 wt.%.

The content of each component (a), (b), (c), (d), (e), (f) and (g) is based on the total composition of the polyalkyl(meth)acrylate-based polymer.

In a particular embodiment, the proportions of components (a), (b), (c), (d), (e), (f) and (g) add up to 100% by weight.

A further object of the present invention is directed to polyalkyl(meth)acrylate-based polymers, comprising the following monomers:
(a) 6 wt.% to 12 wt.% of esters of (meth)acrylic acid and a hydroxylated hydrogenated polybutadiene;
(b) 0 wt.% to 1 wt.% of methyl methacrylate;
(c) 45 wt.% to 70 wt.% of n-butyl methacrylate;
(d) 0 wt.% to 20 wt.% of C5-11 alkyl methacrylates;
(e) 0.2 wt.% to 18 wt.% of C12-15 alkyl methacrylates, preferably LMA;
(f) 2 wt.% to 19.8 wt.% of C16-20 alkyl methacrylates, preferably SMA; and
(g) 0 wt.% to 1 wt.% of styrene monomers,
wherein the sum of components (e) and (f) is equal to or less than 20 wt.%.

A further object of the present invention is directed to polyalkyl(meth)acrylate-based polymers, consisting of the following monomers:
(a) 9 wt.% to 12 wt.% of esters of (meth)acrylic acid and a hydroxylated hydrogenated polybutadiene;
(b) 0 wt.% to 1 wt.% of methyl methacrylate;
(c) 60 wt.% to 70 wt.% of n-butyl methacrylate;
(d) 0 wt.% to 20 wt.% of C5-11 alkyl methacrylates;
(e) 0.2 wt.% to 18 wt.% of C12-15 alkyl methacrylates;
(f) 2 wt.% to 19.8 wt.% of C16-20 alkyl methacrylates; and
(g) 0 wt.% to 1 wt.% of styrene monomers,
wherein the sum of components (e) and (f) is equal to or less than 20 wt.%.

The content of each component (a), (b), (c), (d), (e) and (f) is based on the total composition of the polyalkyl(meth)acrylate-based polymer.

In a particular embodiment, the proportions of components (a), (b), (c), (d), (e) and (f) add up to 100% by weight.

The weight-average molecular weight of the polyalkyl(meth)acrylate based polymers according to the present invention is preferably in the range of 100,000 g/mol to 1,000,000 g/mol, more preferably in the range of 300,000 g/mol to 900,000 g/mol and especially preferred in the range of 500,000 g/mol to 900,000 g/mol and the number-average molecular weight of the polyalkyl(meth)acrylate based comb polymers according to the present invention is preferably in the range of 100,000 g/mol to 300,000 g/mol, more preferably in the range of 100,000 g/mol to 200,000 g/mol and especially preferred in the range of 110,000 g/mol to 160,000 g/mol.

A polyalkyl (meth)acrylate-based polymer in the context of this invention comprises a first polymer, which is also referred to as backbone or main chain, and a multitude of further polymers which are referred to as side chains and are bonded covalently to the backbone. In the present case, the backbone of the polyalkyl (meth)acrylate-based polymer is formed by the interlinked unsaturated groups of the mentioned (meth)acrylates. The ester groups of the (meth)acrylic esters, the phenyl radicals of the styrene monomers and the substituents of the further free-radically polymerizable comonomers form the side chains of the polyalkyl (meth)acrylate-based polymer.

The term "methacrylate" refers to esters of methacrylic acid; and the term "(meth)acrylate" refers to both, esters of acrylic acid and esters of methacrylic acid.

The hydroxylated hydrogenated polybutadiene for use in accordance with the invention has a number-average molar mass Mn of 4.000 to 6.000 g/mol, preferably 4.500 to 5.000 g/mol. Because of their high molar mass, the hydroxylated hydrogenated polybutadienes can also be referred to as macroalcohols in the context of this invention.

The number-average molar mass Mn is determined by size exclusion chromatography using commercially available polybutadiene standards. The determination is effected to DIN 55672-1 by gel permeation chromatography with THF as eluent.

Preferably, the hydroxylated hydrogenated polybutadiene has a hydrogenation level of at least 99%. An alternative measure of the hydrogenation level which can be determined on the copolymer of the invention is the iodine number. The iodine number refers to the number of grams of iodine which can be added onto 100 g of copolymer. Preferably, the copolymer of the invention has an iodine number of not more than 5 g of iodine per 100 g of copolymer. The iodine number is determined by the Wijs method according to DIN 53241-1:1995-05.

Preferred hydroxylated hydrogenated polybutadienes can be obtained according to GB 2270317.

Some hydroxylated hydrogenated polybutadienes are also commercially available. The commercially hydroxylated hydrogenated polybutadienes include, for example, a hydrogenated polybutadiene OH-functionalized to an extent of about 98% by weight (also called olefin copolymer OCP) having about 50% each of 1,2 repeat units and 1,4 repeat units, of Mn = 4200 g/mol, from Cray Valley (Paris), a daughter company of Total (Paris).

Preference is given to monohydroxylated hydrogenated polybutadienes. More preferably, the hydroxylated hydrogenated polybutadiene is a hydroxyethyl- or hydroxypropyl-terminated hydrogenated polybutadiene. Particular preference is given to hydroxypropyl-terminated polybutadienes.

These monohydroxylated hydrogenated polybutadienes can be prepared by first converting butadiene monomers by anionic polymerization to polybutadiene. Subsequently, by reaction of the polybutadiene monomers with ethylene oxide or propylene oxide, a hydroxy-functionalized polybutadiene can be prepared. This hydroxylated polybutadiene can be hydrogenated in the presence of a suitable transition metal catalyst.

The esters of (meth)acrylic acid for use in accordance with the invention and a hydroxylated hydrogenated polybutadiene described are also referred to as macromonomers in the context of this invention because of their high molar mass.

The macromonomers for use in accordance with the invention can be prepared by transesterification of alkyl (meth)acrylates. Reaction of the alkyl (meth)acrylate with the hydroxylated hydrogenated polybutadiene forms the ester of the invention. Preference is given to using methyl (meth)acrylate or ethyl (meth)acrylate as reactant.

This transesterification is widely known. For example, it is possible for this purpose to use a heterogeneous catalyst system, such as lithium hydroxide/calcium oxide mixture (LiOH/CaO), pure lithium hydroxide (LiOH), lithium methoxide (LiOMe) or sodium methoxide (NaOMe) or a homogeneous catalyst system such as isopropyl titanate (Ti(OiPr)4) or dioctyltin oxide (Sn(OCt)2O). The reaction is an equilibrium reaction. Therefore, the low molecular weight alcohol released is typically removed, for example by distillation.

In addition, the macromonomers can be obtained by a direct esterification proceeding, for example, from (meth)acrylic acid or (meth)acrylic anhydride, preferably under acidic catalysis by p-toluenesulfonic acid or methanesulfonic acid, or from free methacrylic acid by the DCC method (dicyclohexylcarbodiimide).

Furthermore, the present hydroxylated hydrogenated polybutadiene can be converted to an ester by reaction with an acid chloride such as (meth)acryloyl chloride.

Preferably, in the above-detailed preparations of the esters of the invention, polymerization inhibitors are used, for example the 4-hydroxy-2,2,6,6-tetramethylpiperidinooxyl radical and/or hydroquinone monomethyl ether.

The C5-11 alkyl (meth)acrylates for use in accordance with the invention are esters of acrylic or methacrylic acid and alcohols having 5 to 11 carbon atoms. The term "C5-11 alkyl (meth)acrylates" encompasses individual acrylic or methacrylic esters with an alcohol of a particular length, and likewise mixtures of methacrylic esters with alcohols of different lengths.

Suitable C5-11 alkyl (meth)acrylates include, for example, pentyl (meth)acrylate, hexyl (meth)acrylate, heptyl (meth)acrylate, octyl (meth)acrylate, 2-ethylhexyl (meth)acrylate, nonyl (meth)acrylate, n-decyl (meth)acrylate, iso-decyl (meth)acrylate and undecyl (meth)acrylate. Particularly preferred C5-11 alkyl (meth)acrylates are methacrylic esters of iso-decyl methacrylate. The C12-15 alkyl (meth)acrylates for use in accordance with the invention are esters of acrylic or methacrylic acid and alcohols having 12 to 15 carbon atoms. The term "C12-15 alkyl (meth)acrylates" encompasses individual acrylic or methacrylic esters with an alcohol of a particular length, and likewise mixtures of methacrylic esters with alcohols of different lengths. Suitable C12-15 alkyl (meth)acrylates include, for example, 5-methyl-undecyl (meth)acrylate, dodecyl (meth)acrylate, 2-methyldodecyl (meth)acrylate, tridecyl (meth)acrylate, 5-methyltridecyl (meth)acrylate, tetradecyl methacrylate and pentadecyl (meth)acrylate.

Particularly preferred C11-15 alkyl (meth)acrylates are methacrylic esters of a linear C12-14 alcohol mixture; most preferred C12-14 alkyl methacrylate.

The C16-20 alkyl (meth)acrylates for use in accordance with the invention are esters of (meth)acrylic acid and straight chain or branched alcohols having 16 to 20 carbon atoms. The term "C16-20 alkyl methacrylates" encompasses individual (meth)acrylic esters with an alcohol of a particular length, and likewise mixtures of (meth)acrylic esters with alcohols of different lengths. Suitable C16-20 alkyl (meth)acrylates include, for example, hexadecyl (meth)acrylate, 2-methylhexadecyl (meth)acrylate, heptadecyl (meth)acrylate, octadecyl (meth)acrylate, nonadecyl (meth)acrylate and eicosyl (meth)acrylate.

The polyalkyl(meth)acrylate-based polymers in accordance with the invention can be prepared by free-radical polymerization and by related methods of controlled free-radical polymerization, for example ATRP (= atom transfer radical polymerization) or RAFT (= reversible addition fragmentation chain transfer).

Standard free-radical polymerization is detailed, inter alia, in Ullmann's Encyclopedia of Industrial Chemistry, Sixth Edition. In general, a polymerization initiator and optionally a chain transfer agent are used for this purpose.

The usable initiators include azo initiators widely known in the technical field, such as AIBN and 1,1-azobiscyclohexanecarbonitrile, and also peroxy compounds such as methyl ethyl ketone peroxide, acetylacetone peroxide, dilauryl peroxide, tert-butyl per-2-ethylhexanoate, ketone peroxide, tert-butyl peroctoate, methyl isobutyl ketone peroxide, cyclohexanone peroxide, dibenzoyl peroxide, tert-butyl peroxybenzoate, tert-butyl peroxyisopropylcarbonate, 2,5-bis(2-ethylhexanoylperoxy)-2,5-dimethylhexane, tert-butyl peroxy-2-ethylhexanoate, tert-butyl peroxy-3,5,5-trimethylhexanoate, dicumyl peroxide, 1,1-bis(tert-butylperoxy)cyclohexane, 1,1-bis(tert-butylperoxy)-3,3,5-trimethylcyclohexane, cumyl hydroperoxide, tert-butyl hydroperoxide, bis(4-tert-butylcyclohexyl) peroxydicarbonate, mixtures of two or more of the aforementioned compounds with one another, and mixtures of the aforementioned compounds with unspecified compounds which can likewise form free radicals. Suitable chain transfer agents are especially oil-soluble mercaptans, for example n-dodecyl mercaptan or 2-mercaptoethanol, or else chain transfer agents from the class of the terpenes, for example terpinolene.

The ATRP method is known per se. It is assumed that this is a "living" free-radical polymerization, but no restriction is intended by the description of the mechanism. In these processes, a transition metal compound is reacted with a compound having a transferable atom group. This involves transfer of the transferable atom group to the transition metal compound, as a result of which the metal is oxidized. This reaction forms a free radical which adds onto ethylenic groups. However, the transfer of the atom group to the transition metal compound is reversible, and so the atom group is transferred back to the growing polymer chain, which results in formation of a controlled polymerization system. It is accordingly possible to control the formation of the polymer, the molecular weight and the molecular weight distribution.

This reaction regime is described, for example, by J.-S. Wang, et al., J. Am. Chem. Soc, vol. 117, p. 5614-5615 (1995), by Matyjaszewski, Macromolecules, vol. 28, p. 7901-7910 (1995). In addition, patent applications WO 96/30421, WO 97/47661, WO 97/18247, WO 98/40415 and WO 99/10387 disclose variants of the above-elucidated ATRP. In addition, the polymers of the invention can also be obtained via RAFT methods, for example. This method is described in detail, for example, in WO 98/01478 and WO 2004/083169.

The polymerization can be conducted under standard pressure, reduced pressure or elevated pressure. The polymerization temperature is also uncritical. In general, however, it is in the range from -20°C to 200°C, preferably 50°C to 150°C and more preferably 80°C to 130°C.

The polymerization can be conducted with or without solvent. The term "solvent" should be understood here in a broad sense. The solvent is selected according to the polarity of the monomers used, it being possible with preference to use 100N oil, comparatively light gas oil and/or aromatic hydrocarbons, for example toluene or xylene.

The polyalkyl(meth)acrylate-based polymers according to the present invention can be used in all common grades of motor oils having the viscosity characteristics defined in the document SAE J300.

A second object of the present invention is directed to an additive composition, comprising:
(A) 60 wt.% to 80 wt.% of a base oil, and
(B) 20 wt.% to 40 wt.% of a polyalkyl(meth)acrylate-based polymer, comprising the following monomers:
   (a) 5 wt.% to 15 wt.% of esters of (meth)acrylic acid and a hydroxylated hydrogenated polybutadiene;
   (b) 0 wt.% to 2 wt.% of methyl methacrylate;
   (c) 45 wt.% to 80 wt.% of n-butyl methacrylate;
   (d) 0 wt.% to 20 wt.% of C5-11 alkyl methacrylates;
   (e) 0.2 wt.% to 18 wt.% of C12-15 alkyl methacrylates;
   (f) 2 wt.% to 19.8 wt.% of C16-20 alkyl methacrylates; and
   (g) 0 wt.% to 2 wt.% of styrene monomers,
wherein the sum of components (e) and (f) is equal to or less than 20 wt.%.

A further second object of the present invention is directed to an additive composition, comprising:
(A) 60 wt.% to 80 wt.% of a base oil, and
(B) 20 wt.% to 40 wt.% of a polyalkyl(meth)acrylate-based polymer, comprising the following monomers:
   (a) 6 wt.% to 12 wt.% of esters of (meth)acrylic acid and a hydroxylated hydrogenated polybutadiene;
   (b) 0 wt.% to 1 wt.% of methyl methacrylate;
   (c) 45 wt.% to 70 wt.% of n-butyl methacrylate;
   (d) 0 wt.% to 20 wt.% of C5-11 alkyl methacrylates;
   (e) 0.2 wt.% to 18 wt.% of C12-15 alkyl methacrylates, preferably LMA;
   (f) 2 wt.% to 19.8 wt.% of C16-20 alkyl methacrylates, preferably SMA; and
   (g) 0 wt.% to 1 wt.% of styrene monomers,
wherein the sum of components (e) and (f) is equal to or less than 20 wt.%.

A further second object of the present invention is directed to an additive composition, comprising:
(A) 60 wt.% to 80 wt.% of a base oil, and
(B) 20 wt.% to 40 wt.% of a polyalkyl(meth)acrylate-based polymer, consisting of the following monomers:
   (a) 9 wt.% to 12 wt.% of esters of (meth)acrylic acid and a hydroxylated hydrogenated polybutadiene;
   (b) 0 wt.% to 1 wt.% of methyl methacrylate;
   (c) 60 wt.% to 70 wt.% of n-butyl methacrylate;
   (d) 0 wt.% to 20 wt.% of C5-11 alkyl methacrylates;
   (e) 0.2 wt.% to 18 wt.% of C12-15 alkyl methacrylates;
   (f) 2 wt.% to 19.8 wt.% of C16-20 alkyl methacrylates; and
   (g) 0 wt.% to 1 wt.% of styrene monomers,
   wherein the sum of components (e) and (f) is equal to or less than 20 wt.%.

The content of each component (A) and (B) is based on the total composition of the additive composition.

In a particular embodiment, the proportions of components (A) and (B) add up to 100% by weight.

The content of each component (a), (b), (c), (d), (e), (f) and (g) is based on the total composition of the polyalkyl(meth)acrylate-based polymer.

In a particular embodiment, the proportions of components (a), (b), (c), (d), (e), (f) and (g) add up to 100% by weight.

The base oil to be used in the additive composition comprises an oil of lubricating viscosity. Such oils include natural and synthetic oils, oil derived from hydrocracking, hydrogenation, and hydro-finishing, unrefined, refined, re-refined oils or mixtures thereof.

The base oil may also be defined as specified by the American Petroleum Institute (API) (see April 2008 version of "Appendix E-API Base Oil Interchangeability Guidelines for Passenger Car Motor Oils and Diesel Engine Oils", section 1.3 Sub-heading 1.3. "Base Stock Categories").

The API currently defines five groups of lubricant base stocks (API 1509, Annex E - API Base Oil Interchangeability Guidelines for Passenger Car Motor Oils and Diesel Engine Oils, September 2011). Groups I, II and III are mineral oils which are classified by the amount of saturates and sulphur they contain and by their viscosity indices; Group IV are polyalphaolefins; and Group V are all others, including e.g. ester oils. Ester oils which can be used in accordance with the present invention are preferably selected from the group consisting of Plastomoll DNA, DIOS and mixtures thereof; DIOS being even more preferred. The table below illustrates these API classifications.

| Group | Saturates | Sulphur content | Viscosity Index (VI) |
|---|---|---|---|
| I | < 90% | > 0.03% | 80-120 |
| II | at least 90% | not more than 0.03% | 80-120 |
| III | at least 90% | not more than 0.03% | at least 120 |
| IV | All polyalphaolefins (PAOs) | | |
| V | All others not included in Groups I, II, III or IV (e.g. ester oils) | | |

The kinematic viscosity at 100°C (KV₁₀₀) of appropriate apolar base oils used to prepare an additive composition or lubricating composition in accordance with the present invention is preferably in the range of 3 mm²/s to 10 mm²/s, more preferably in the range of 4 mm²/s to 8 mm²/s, according to ASTM D445.

Further base oils which can be used in accordance with the present invention are Group II-III Fischer-Tropsch derived base oils.

Fischer-Tropsch derived base oils are known in the art. By the term "Fischer-Tropsch derived" is meant that a base oil is, or is derived from, a synthesis product of a Fischer-Tropsch process. A Fischer-Tropsch derived base oil may also be referred to as a GTL (Gas-To-Liquids) base oil. Suitable Fischer-Tropsch derived base oils that may be conveniently used as the base oil in the lubricating composition of the present invention are those as for example disclosed in EP 0 776 959, EP 0 668 342, WO 97/21788, WO 00/15736, WO 00/14188, WO 00/14187, WO 00/14183, WO 00/14179, WO 00/08115, WO 99/41332, EP 1 029 029, WO 01/18156, WO 01/57166 and WO 2013/189951.

Especially for 0W and 5W engine oil formulations API Group III oils are commonly used.

The additive composition of the present invention comprises preferably 70 wt.% to 75 wt.% of base oil (component (A)) and 25 wt.% to 30 wt.% of the polyalkyl(meth)acrylate-based polymer (component (B)), based on the total weight of the additive composition.

A third object of the present invention is directed to a lubricating oil composition, comprising:
(A) 75 wt.% to 99.5 wt.% of a base oil;
(B) 0.5 wt.% to 10 wt.% by weight of a polyalkyl(meth)acrylate-based polymer, comprising the following monomers:
   (a) 5 wt.% to 15 wt.% of esters of (meth)acrylic acid and a hydroxylated hydrogenated polybutadiene;
   (b) 0 wt.% to 2 wt.% of methyl methacrylate;
   (c) 45 wt.% to 80 wt.% of n-butyl methacrylate;
   (d) 0 wt.% to 20 wt.% of C5-11 alkyl methacrylates;
   (e) 0.2 wt.% to 18 wt.% of C12-15 alkyl methacrylates;
   (f) 2 wt.% to 19.8 wt.% of C16-20 alkyl methacrylates; and
   (g) 0 wt.% to 2 wt.% of styrene monomers,
   wherein the sum of components (e) and (f) is equal to or less than 20 wt.%; and
(C) 0 wt.% to 15 wt.% of one or more further additives.

A further third object of the present invention is directed to a lubricating oil composition, comprising:
(A) 75 wt.% to 99.5 wt.% of a base oil;
(B) 0.5 wt.% to 10 wt.% by weight of a polyalkyl(meth)acrylate-based polymer, comprising the following monomers:
   (a) 6 wt.% to 12 wt.% of esters of (meth)acrylic acid and a hydroxylated hydrogenated polybutadiene;
   (b) 0 wt.% to 1 wt.% of methyl methacrylate;
   (c) 45 wt.% to 70 wt.% of n-butyl methacrylate;
   (d) 0 wt.% to 20 wt.% of C5-11 alkyl methacrylates;
   (e) 0.2 wt.% to 18 wt.% of C12-15 alkyl methacrylates;
   (f) 2 wt.% to 19.8 wt.% of C16-20 alkyl methacrylates; and
   (g) 0 wt.% to 1 wt.% of styrene monomers,
   wherein the sum of components (e) and (f) is equal to or less than 20 wt.%; and
(C) 0 wt.% to 15 wt.% of one or more further additives.

A further third object of the present invention is directed to a lubricating oil composition, comprising:
(A) 75 wt.% to 99.5 wt.% of a base oil;
(B) 0.5 wt.% to 10 wt.% by weight of a polyalkyl(meth)acrylate-based polymer, consisting of the following monomers:
   (a) 9 wt.% to 12 wt.% of esters of (meth)acrylic acid and a hydroxylated hydrogenated polybutadiene;
   (b) 0 wt.% to 1 wt.% of methyl methacrylate;
   (c) 60 wt.% to 70 wt.% of n-butyl methacrylate;
   (d) 0 wt.% to 20 wt.% of C5-11 alkyl methacrylates;
   (e) 0.2 wt.% to 18 wt.% of C12-15 alkyl methacrylates;
   (f) 2 wt.% to 19.8 wt.% of C16-20 alkyl methacrylates; and
   (g) 0 wt.% to 1 wt.% of styrene monomers,
   wherein the sum of components (e) and (f) is equal to or less than 20 wt.%; and
(C) 0 wt.% to 15 wt.% of one or more further additives.

The content of each component (A), (B) and (C) is based on the total composition of the lubricating oil composition.

The content of each component (a), (b), (c), (d), (e), (f) and (g) is based on the total composition of the polyalkyl(meth)acrylate-based polymer.

In a particular embodiment, the proportions of components (a), (b), (c), (d), (e), (f) and (g) add up to 100% by weight.

The lubricating oil composition according to the invention may also contain, as component (C), further additives selected from the group consisting of conventional VI improvers, dispersants, defoamers, detergents, antioxidants, pour point depressants, antiwear additives, extreme pressure additives, friction modifiers, anticorrosion additives, dyes and mixtures thereof.

Conventional VI improvers include hydrogenated styrene-diene copolymers (HSDs, US4116 917, US3772196 and US4788316), especially based on butadiene and isoprene, and also olefin copolymers (OCPs, K. Marsden: "Literature Review of OCP Viscosity Modifiers", Lubrication Science 1 (1988), 265), especially of the poly(ethylene-co-propylene) type, which may often also be present in N/O-functional form with dispersing action, or PAMAs, which are usually present in N-functional form with advantageous additive properties (*boosters*) as dispersants, wear protection additives and/or friction modifiers (DE 1 520 696 to Röhm and Haas, WO 2006/007934 to RohMax Additives).

Compilations of VI improvers and pour point improvers for lubricant oils, especially motor oils, are detailed, for example, in T. Mang, W. Dresel (eds.): "Lubricants and Lubrication", Wiley-VCH, Weinheim 2001: R. M. Mortier, S. T. Orszulik (eds.): "Chemistry and Technology of Lubricants", Blackie Academic & Professional, London 1992; or J. Bartz: "Additive für Schmierstoffe", Expert-Verlag, Renningen-Malmsheim 1994.

Appropriate dispersants include poly(isobutylene) derivatives, for example poly(isobutylene)succinimides (PIBSIs), including borated PIBSIs; and ethylene-propylene oligomers having N/O functionalities.

Dispersants (including borated dispersants) are preferably used in an amount of 0 to 5% by weight, based on the total amount of the lubricating oil composition.

Suitable defoamers are silicone oils, fluorosilicone oils, fluoroalkyl ethers, etc..

The defoaming agent is preferably used in an amount of 0.005 to 0.1% by weight, based on the total amount of the lubricating oil composition.

The preferred detergents include metal-containing compounds, for example phenoxides; salicylates; thiophosphonates, especially thiopyrophosphonates, thiophosphonates and phosphonates; sulfonates and carbonates. As metal, these compounds may contain especially calcium, magnesium and barium. These compounds may preferably be used in neutral or overbased form.

Detergents are preferably used in an amount of 0.2 to 1% by weight, based on the total amount of the lubricating oil composition.

The suitable antioxidants include, for example, phenol-based antioxidants and amine-based antioxidants.

Phenol-based antioxidants include, for example, octadecyl-3-(3,5-di-tert-butyl-4-hydroxyphenyl)propionate; 4,4' -methylenebis(2,6-di-tert-butylphenol); 4,4' -bis(2,6-di-t-butylphenol); 4,4' -b is(2-methyl-6-t-butylphenol); 2,2' -methylenebis(4-ethyl-6-t-butylphenol); 2,2' - methylenebis( 4-methyl-6-t-butyl phenol); 4,4' -butyl idenebis(3-methyl-6-t-butylphenol); 4,4'-isopropylidenebis(2,6-di-t-butylphenol); 2,2'-methylenebis(4-methyl-6-nonylphenol); 2,2'-isobutylidenebis(4,6-dimethylphenol); 2,2'-methylenebis(4-methyl-6-cyclohexylphenol); 2,6-di-t-butyl-4-methylphenol; 2,6-di-t-butyl-4-ethyl-phenol; 2,4-dimethyl-6-t-butylphenol; 2,6-di-t-amyl-p-cresol; 2,6-di-t-butyi-4-(N,N'-dimethylaminomethylphenol); 4,4'thiobis(2-methyl-6-t-butylphenol); 4,4'-thiobis(3-methyl-6-t-butylphenol); 2,2'-thiobis(4-methyl-6-t-butylphenol); bis(3-methyl-4-hydroxy-5-t-butylbenzyl) sulfide; bis(3,5-di-t-butyl-4-hydroxybenzyl) sulfide; n-octyl-3-(4-hydroxy-3,5-di-t-butylphenyl)propionate; n-octadecyl-3-(4-hydroxy-3,5-di-t-butylphenyl)propionate; 2,2'-thio[diethyl-bis-3-(3,5-di-t-butyl-4-hydroxyphenyl)propionate], etc. Of those, especially preferred are bis-phenol-based antioxidants and ester group containing phenol-based antioxidants.

The amine-based antioxidants include, for example, monoalkyldiphenylamines such as monooctyldiphenylamine, monononyldiphenylamine, etc.; dialkyldiphenylamines such as 4,4' - dibutyldiphenylamine, 4,4'-dipentyldiphe nylamine, 4,4'- dihexyldiphenylamine, 4,4'-diheptyldiphenylamine, 4,4'-dioctyldiphenylamine, 4,4'-dinonyldiphenylamine, etc.; polyalkyldiphenylamines such as tetrabutyldiphenylamine, tetrahexyldiphenylamine, tetraoctyldiphenylamine, tetranonyldiphenylamine, etc.; naphthylamines, concretely alpha-naphthylamine, phenyl-alpha-naphthylamine and further alkyl-substituted phenyl-alpha-naphthylamines such as butylphenyl-alpha-naphthylamine, pentylphenyl-alpha-naphthylamine, hexylphenyl-alpha-naphthylamine, heptylphenyl-alpha-naphthylamine, octylphenyl-alpha-naphthylamine, nonylphenyl-alpha-naphthylamine, etc. Of those, diphenylamines are preferred to naphthylamines, from the viewpoint of the antioxidation effect thereof.

Suitable antioxidants may further be selected from the group consisting of compounds containing sulfur and phosphorus, for example metal dithiophosphates, for example zinc dithiophosphates (ZnDTPs), "OOS triesters" = reaction products of dithiophosphoric acid with activated double bonds from olefins, cyclopentadiene, norbornadiene, α-pinene, polybutene, acrylic esters, maleic esters (ashless on combustion); organosulfur compounds, for example dialkyl sulfides, diaryl sulfides, polysulfides, modified thiols, thiophene derivatives, xanthates, thioglycols, thioaldehydes, sulfur-containing carboxylic acids; heterocyclic sulfur/nitrogen compounds, especially dialkyldimercaptothiadiazoles, 2-mercaptobenzimidazoles; zinc bis(dialkyldithiocarbamate) and methylene bis(dialkyldithiocarbamate); organophosphorus compounds, for example triaryl and trialkyl phosphites; organocopper compounds and overbased calcium- and magnesium-based phenoxides and salicylates.

Antioxidants are used in an amount of 0 to 15% by weight, preferably 0.1 to 10% by weight, more preferably 0.5 to 5% by weight, based on the total amount of the lubricating oil composition.

The pour-point depressants include ethylene-vinyl acetate copolymers, chlorinated paraffin-naphthalene condensates, chlorinated paraffin-phenol condensates, polymethacrylates, polyalkylstyrenes, etc. Preferred are polymethacrylates having a mass-average molecular weight of from 5.000 to 50.000 g/mol.

The amount of the pour point depressant is preferably from 0.1 to 5% by weight, based on the total amount of the lubricating oil composition.

The preferred antiwear and extreme pressure additives include sulfur-containing compounds such as zinc dithiophosphate, zinc di-C₃₋₁₂-alkyldithiophosphates (ZnDTPs), zinc phosphate, zinc dithiocarbamate, molybdenum dithiocarbamate, molybdenum dithiophosphate, disulfides, sulfurized olefins, sulfurized oils and fats, sulfurized esters, thiocarbonates, thiocarbamates, polysulfides, etc.; phosphorus-containing compounds such as phosphites, phosphates, for example trialkyl phosphates, triaryl phosphates, e.g. tricresyl phosphate, amine-neutralized mono- and dialkyl phosphates, ethoxylated mono- and dialkyl phosphates,phosphonates, phosphines, amine salts or metal salts of those compounds, etc.; sulfur and phosphorus-containing anti-wear agents such as thiophosphites, thiophosphates, thiophosphonates, amine salts or metal salts of those compounds, etc.

The antiwear agent may be present in an amount of 0 to 3% by weight, preferably 0.1 to 1.5% by weight, more preferably 0.5 to 0.9% by weight, based on the total amount of the lubricating oil composition.

Friction modifiers used may include mechanically active compounds, for example molybdenum disulfide, graphite (including fluorinated graphite), poly(trifluoroethylene), polyamide, polyimide; compounds that form adsorption layers, for example long-chain carboxylic acids, fatty acid esters, ethers, alcohols, amines, amides, imides; compounds which form layers through tribochemical reactions, for example saturated fatty acids, phosphoric acid and thiophosphoric esters, xanthogenates, sulfurized fatty acids; compounds that form polymer-like layers, for example ethoxylated dicarboxylic partial esters, dialkyl phthalates, methacrylates, unsaturated fatty acids, sulfurized olefins or organometallic compounds, for example molybdenum compounds (molybdenum dithiophosphates and molybdenum dithiocarbamates MoDTCs) and combinations thereof with ZnDTPs, copper-containing organic compounds.

Friction modifiers may be used in an amount of 0 to 6% by weight, preferably 0.05 to 4% by weight, more preferably 0.1 to 2% by weight, based on the total amount of the lubricating oil composition.

Some of the compounds listed above may fulfil multiple functions. ZnDTP, for example, is primarily an antiwear additive and extreme pressure additive, but also has the character of an antioxidant and corrosion inhibitor (here: metal passivator/deactivator).

The above-detailed additives are described in detail, inter alia, in T. Mang, W. Dresel (eds.): "Lubricants and Lubrication", Wiley-VCH, Weinheim 2001; R. M. Mortier, S. T. Orszulik (eds.): "Chemistry and Technology of Lubricants".

Preferably, the total concentration of the one or more additives (C) is 0.05% to 15% by weight, more preferably 3% to 10% by weight, based on the total weight of the lubricating oil composition.

The invention has been illustrated by the following non-limiting examples.

### Experimental part

### Abbreviations

- AMA: alkyl methacrylate
- Group II/III oil: light process oil with a KV100 of 1 cSt
- BMA: *n*-butyl methacrylate
- C1 AMA: C1-alkyl methacrylate = methyl methacrylate (MMA)
- C4 AMA: C4-alkyl methacrylate = n-butyl methacrylate (BMA)
- C12-15 AMA: mixture of C12-15-alkyl methacrylates
- C16-18 AA: mixture of C16-18 alkyl acrylates
- 100N oil: Group II base oil with a KV100 of 4 cSt
- DDM: dodecanethiol
- HTHS80: high-temperature high-shear viscosity @80°C, measured according to CEC L-036
- HTHS100: high-temperature high-shear viscosity @100°C, measured according to CEC L-036
- HTHS150: high-temperature high-shear viscosity @150°C, measured according to CEC L-036
- IDMA: *iso*-decyl methacrylate, comprising up to 15 wt.% of C11 alkyl methacrylate
- KV: kinematic viscosity measured according to ASTM D445
- KV40: kinematic viscosity @40°C, measured according to ISO 3104
- KV100: kinematic viscosity @100°C, measured according to ISO 3104
- LMA: lauryl methacrylate, 73% C12, 27% C14, all linear
- MM: macromonomer
- MMA: methyl methacrylate
- Mₙ: number-average molecular weight
- M_{w}: weight-average molecular weight
- NB 3020: Nexbase^{®} 3020, Group III base oil from Neste with a KV100 of 2.2 cSt
- NB 3043: Nexbase^{®} 3043, Group III base oil from Neste with a KV100 of 4.3 cSt
- OLOA 9728X: DI Package for PCMO commercially available from Oronite
- PCMO: Passenger car motor oils
- PDI: Polydispersity index
- SMA: C16-20 alkyl methacrylate, all linear
- VI: viscosity index, measured according to ISO 2909

### Test methods

The polyalkyl (meth)acrylate-based polymers according to the present invention and the comparative examples were characterized with respect to their molecular weight and PDI. Molecular weights were determined by size exclusion chromatography (SEC) using commercially available polymethylmethacrylate (PMMA) standards. The determination is effected by gel permeation chromatography with THF as eluent (flow rate: 1 mL/min; injected volume: 100 µl).

| | |
|---|---|
| Columns: | 5 SDV Columns 8 × 300 mm resp. 8 x 50 mm (company PSS at Mainz) |
| | 1 Solvent-Peak Separation Column 8 x100 mm (company Shodex) |

| No. | Type | | Dimension | Serial no. |
|---|---|---|---|---|
| Precolumn | SDV | 10µ | 8 X 50 mm | 91121224 |
| 1 | SDV LXL | 10µ | 8 X 300 mm | 6013101 |
| 2 | SDV LinL | 10µ | 8 X 300 mm | 6082302 |
| 3 | SDV 100Å | 10µ | 8 X 300 mm | 0071401 |
| 4 | SDV 100Å | 10µ | 8 X 300 mm | 0070508 |
| 5 | KF-800D | | 8 X 100 mm | 2007012 |

| | | |
|---|---|---|
| Instruments: | Agilent 1100 Series | Pump G1310A |
| | PSS SECcurity | Inline-Degaser 409-0024 |
| | Agilent 1260 Series | Autosampler G1329B |
| | Agilent 1260 Series | UV-Detector G1314B |
| | Agilent 1100 Series | RI-Detector G1362A |
| | Agilent 1100 Series | Control-Module G1323B |
| | Techlab | Column oven K-5 |
| Oven: | Temperature 35°C | |
| Eluent: | Tetrahydrofuran | |
| | Eluent is continuously distilled and circulated by pump | |
| Flow rate: | 1 ml / min | |
| Injected volume: | 100 µl | |
| Detection: | Rl: Temperature 35°C | |
| | UV: Wavelength 239 nm | |
| Delay volume: | 0.175 ml (between UV- and RI-signal) | |
| Software: | PSS WinGPC-Software | |
| Concentration sample solution: | | 2 g/L (Mw > 106: 1 g/L ... 0.5 g/L) |
| Standards: | PMMA (for example PSS (Mainz) or Polymer Laboratories) | |
| Concentration standard solution: 1 g/l (for Mw > 106: 0.5 g/l, Mw > 2*106: 0.25 g/l) (narrow distribution) | | |
| Internal standard: | 1,2-Dichlorobenzene → | 0.2 µL to 99.8 µL Sample |

The lubricating oil compositions including the polyalkyl (meth)acrylate-based polymers according to the present invention and comparative examples were characterized with respect to kinematic viscosity at 40°C (KV40) and 100°C (KV100) to ASTM D445, the viscosity index (VI) to ASTM D 2270 and pour point to ASTM D-5950.

They were further characterized by their Brookfield viscosities at -40°C to DIN 51398, their CCS (Cold-Cranking Simulator) apparent viscosity at -30°C to ASTM D 5293 and their yield stress at - 35°C to ASTM D-4684 (mini rotary viscometer - MRV-TP1).

To show the shear stability of the lubricating oil compositions, the PSSI (Permanent Shear Stability Index) was calculated according to ASTM D 6022-01 (Standard Practice for Calculation of Permanent Shear Stability Index) based on data measured according to ASTM D-445/CEC L-45-A-99 ("Kegelrollenlager" - KRL, 20 hours at 60°C, 5 KN, 1475 +/-25 rpm).

The shear stability of the lubricating oil compositions was further measured to ASTM D-445/CEC-L-14 (Bosch injector, 30 cyles), and the PSSI was calculated according to ASTM D 6022-01 (Standard Practice for Calculation of Permanent Shear Stability Index).

### Synthesis of a hydroxylated hydrogenated polybutadiene

The macroalcohol prepared was a hydroxypropyl-terminated hydrogenated polybutadiene having a mean molar mass Mₙ = 4750 g/mol.

The macroalcohol was synthesized by an anionic polymerization of 1,3-butadiene with butyllithium at 20-45°C. On attainment of the desired degree of polymerization, the reaction was stopped by adding propylene oxide and lithium was removed by precipitation with methanol. Subsequently, the polymer was hydrogenated under a hydrogen atmosphere in the presence of a noble metal catalyst at up to 140°C and pressure 200 bar. After the hydrogenation had ended, the noble metal catalyst was removed, and organic solvent was drawn off under reduced pressure. Finally, the base oil NB 3020 was used for dilution to a polymer content of 70% by weight.

The vinyl content of the macroalcohol was 61%, the hydrogenation level > 99% and the OH functionality > 98%. These values were determined by H-NMR (nuclear resonance spectroscopy).

### Synthesis of macromonomer (MM)

In a 2 L stirred apparatus equipped with saber stirrer, air inlet tube, thermocouple with controller, heating mantle, column having a random packing of 3 mm wire spirals, vapor divider, top thermometer, reflux condenser and substrate cooler, 1000 g of the above-described macroalcohol are dissolved in 450 g of methyl methacrylate (MMA) by stirring at 60°C. Added to the solution are 20 ppm of 2,2,6,6-tetramethylpiperidin-1-oxyl radical and 200 ppm of hydroquinone monomethyl ether. After heating to MMA reflux (bottom temperature about 110°C) while passing air through for stabilization, about 20 g of MMA are distilled off for azeotropic drying. After cooling to 95°C, 0.30 g of LiOCH₃ is added and the mixture is heated back to reflux. After the reaction time of about 1 hour, the top temperature has fallen to ~64°C because of methanol formation. The methanol/MMA azeotrope formed is distilled off constantly until a constant top temperature of about 100°C is established again. At this temperature, the mixture is left to react for a further hour. For further workup, the bulk of MMA is drawn off under reduced pressure. Insoluble catalyst residues are removed by pressure filtration (Seitz T1000 depth filter). The content of NB 3020 "entrained" into the copolymer syntheses described further down was taken into account accordingly.

### Synthesis of Example 1

62.70 g of NB3043, 26.00 g of Group II/III oil, 28.40 g of MM (70% in Nexbase 3020), 7.00 g of LMA, 8.70 g of SMA, 0.10 g of styrene, 61.20 g of BMA and 0.30 g of MMA were placed in a 4-necked glass flask equipped with a stirrer, temperature sensor and nitrogen pipe as well as a reflux condenser. The flask was flushed with nitrogen and heated to 90°C. Afterwards, 1.16 g of 10% solution of tert-butylperoxy-2-ethylhexanoate in NB3043 was added to start the reaction and a mixture consisting of 0.10 g of MM (70% in NB 3020), 7.00 g of LMA, 8.80 g of SMA, 0.20 g of styrene, 61.20 g of BMA, 0.6 g of MMA, 57.0 g of NB3043 and 20.8 g of Group II/III oil was added over a period of 180 minutes. Simultaneously, a second mixture of 0.27 g tert-butylperoxy-2-ethylhexanoate and 2.45 g NB3043 was added over a period of 240 min.

240 minutes after start of the reaction, another 87.5 g of NB3043 were added over a period of 120 minutes. Simultaneously, a mixture of 0.35 g tert-butylperoxy-2-ethylhexanoate and 3.15 g NB3043 were added over a period of 180 minutes. 60 minutes after the start of the second feed, a mixture of 1.10 g LMA and 2.57 g SMA were added to the heel to aid lowering BMA-residuals.

The mixture was stirred over night at 90°C. The following day, 256.90 g of NB3043 were added to the flask and stirred for approximately 90 minutes at 90°C, before transferring the batch to a glass bottle.

### Synthesis of Example 2

62.70 g of NB3043, 26.00 g of group II/III oil, 28.40 g of MM (70% in Nexbase 3020), 15.70 g of SMA, 0.10 g of styrene, 61.20 g of BMA and 0.30 g of MMA were placed in a 4-necked glass flask equipped with a stirrer, temperature sensor and nitrogen pipe as well as a reflux condenser. The flask was flushed with nitrogen and heated to 90°C. Afterwards, 1.16 g of 10% solution of tert-butylperoxy-2-ethylhexanoate in NB3043 was added to start the reaction and a mixture consisting of 0.10 g of MM (70% in NB 3020), 15.80 g of SMA, 0.20 g of styrene, 61.20 g of BMA, 0.60 g of MMA, 57.00 g of NB3043 and 20.80 g of group II/III oil was added over a period of 180 minutes. Simultaneously, a second mixture of 0.27 g tert-butylperoxy-2-ethylhexanoate and 2.45 g NB3043 was added over a period of 240 min.

240 minutes after start of the reaction, another 87.50 g of NB3043 were added over a period of 120 minutes. Simultaneously, a mixture of 0.35 g tert-butylperoxy-2-ethylhexanoate and 3.15 g NB3043 were added over a period of 180 minutes. 60 minutes after the start of the second feed, a mixture of 1.10 g LMA and 2.60 g SMA were added to the heel to aid lowering BMA-residuals.

The mixture was stirred over night at 90°C. The following day, 256.90 g of NB3043 were added to the flask and stirred for approximately 90 minutes at 90°C, before transferring the batch to a glass bottle.

### Synthesis of Example 3

62.60 g of NB3043, 26.00 g of group II/III oil, 29.00 g of MM (70% in Nexbase 3020), 11.30 g of LMA, 4.80 g of SMA, 0.10 g of styrene, 60.60 g of BMA and 0.30 g of MMA were placed in a 4-necked glass flask equipped with a stirrer, temperature sensor and nitrogen pipe as well as a reflux condenser. The flask was flushed with nitrogen and heated to 90°C. Afterwards, 1.17 g of 10% solution of tert-butylperoxy-2-ethylhexanoate in NB3043 was added to start the reaction and a mixture consisting of 0.10 g of MM (70% in NB 3020), 11.30 g of LMA, 4.80 g of SMA, 0.20 g of styrene, 60.60 g of BMA, 0.60 g of MMA, 56.90 g of NB3043 and 20.80 g of group II/III oil was added over a period of 180 minutes. Simultaneously, a second mixture of 0.27 g tert-butylperoxy-2-ethylhexanoate and 2.45 g NB3043 was added over a period of 240 min.

240 minutes after start of the reaction, another 87.50 g of NB3043 were added over a period of 120 minutes. Simultaneously, a mixture of 0.35 g tert-butylperoxy-2-ethylhexanoate and 3.15 g NB3043 were added over a period of 180 minutes. 60 minutes after the start of the second feed, a mixture of 1.10 g LMA and 2.60 g SMA were added to the heel to aid lowering BMA-residuals.

The mixture was stirred over night at 90°C. The following day, 256.90 g of NB3043 were added to the flask and stirred for approximately 90 minutes at 90°C, before transferring the batch to a glass bottle.

### Synthesis of Example 4

64.20 g of NB3043, 26.00 g of group II/III oil, 23.30 g of MM (70% in Nexbase 3020), 9.09 g of IDMA, 16.40 g of SMA, 0.10 g of styrene, 55.10 g of BMA and 0.20 g of MMA were placed in a 4-necked glass flask equipped with a stirrer, temperature sensor and nitrogen pipe as well as a reflux condenser. The flask was flushed with nitrogen and heated to 90°C. Afterwards, 1.15 g of 10% solution of tert-butylperoxy-2-ethylhexanoate in NB3043 was added to start the reaction and a mixture consisting of 0.10 g of MM (70% in NB 3020), 8.92 g of IDMA, 16.10 g of SMA, 0.20 g of styrene, 54.10 g of BMA, 0.20 g of MMA, 58.30 g of NB3043 and 21.30 g of group II/III oil was added over a period of 180 minutes. Simultaneously, a second mixture of 0.28 g tert-butylperoxy-2-ethylhexanoate and 2.51 g NB3043 was added over a period of 240 min.

240 minutes after start of the reaction, another 88.40 g of NB3043 were added over a period of 120 minutes. Simultaneously, a mixture of 0.35 g tert-butylperoxy-2-ethylhexanoate and 3.15 g NB3043 were added over a period of 180 minutes. 60 minutes after the start of the second feed, a mixture of 1.10 g LMA and 2.60 g SMA were added to the heel to aid lowering BMA-residuals.

The mixture was stirred over night at 90°C. The following day, 259.50 g of NB3043 were added to the flask and stirred for approximately 90 minutes at 90°C, before transferring the batch to a glass bottle.

### Synthesis of Example 5

62.70 g of NB3043, 26.00 g of group II/III oil, 28.40 g of MM (70% in Nexbase 3020), 12.70 g of LMA, 3.10 g of SMA, 0.10 g of styrene, 61.20 g of BMA and 0.30 g of MMA were placed in a 4-necked glass flask equipped with a stirrer, temperature sensor and nitrogen pipe as well as a reflux condenser. The flask was flushed with nitrogen and heated to 90°C. Afterwards, 1.16 g of 10% solution of tert-butylperoxy-2-ethylhexanoate in NB3043 was added to start the reaction and a mixture consisting of 0.10 g of MM (70% in NB 3020), 12.70 g of LMA, 3.10 g of SMA, 0.20 g of styrene, 61.20 g of BMA, 0.60 g of MMA, 57.00 g of NB3043 and 20.80 g of group II/III oil was added over a period of 180 minutes. Simultaneously, a second mixture of 0.27 g tert-butylperoxy-2-ethylhexanoate and 2.45 g NB3043 was added over a period of 240 min.

240 minutes after start of the reaction, another 87.50 g of NB3043 were added over a period of 120 minutes. Simultaneously, a mixture of 0.35 g tert-butylperoxy-2-ethylhexanoate and 3.15 g NB3043 were added over a period of 180 minutes. 60 minutes after the start of the second feed, a mixture of 1.10 g LMA and 2.60 g SMA were added to the heel to aid lowering BMA-residuals.

The mixture was stirred over night at 90°C. The following day, 256.90 g of NB3043 were added to the flask and stirred for approximately 90 minutes at 90°C, before transferring the batch to a glass bottle.

### Synthesis of Example 6 (Comparative)

62.70 g of NB3043, 25.90 g of group II/III oil, 27.90 g of MM (70% in Nexbase 3020), 1.20 g of LMA, 22.00 g of SMA, 0.10 g of styrene, 54.00 g of BMA and 0.30 g of MMA were placed in a 4-necked glass flask equipped with a stirrer, temperature sensor and nitrogen pipe as well as a reflux condenser. The flask was flushed with nitrogen and heated to 90°C. Afterwards, 1.16 g of 10% solution of tert-butylperoxy-2-ethylhexanoate in NB3043 was added to start the reaction and a mixture consisting of 0.10 g of MM (70% in NB 3020), 1.20 g of LMA, 22.00 g of SMA, 0.20 g of styrene, 54.00 g of BMA, 0.6 g of MMA, 57.1 g of NB3043 and 20.8 g of group II/III oil was added over a period of 180 minutes. Simultaneously, a second mixture of 0.27 g tert-butylperoxy-2-ethylhexanoate and 2.46 g NB3043 was added over a period of 240 minutes.

240 minutes after start of the reaction, another 87.5 g of NB3043 were added over a period of 120 minutes. Simultaneously, a mixture of 0.35 g tert-butylperoxy-2-ethylhexanoate and 3.15 g NB3043 were added over a period of 180 minutes.

The mixture was stirred over night at 90°C. The following day, 256.90 g of NB3043 were added to the flask and stirred for approximately 90 minutes at 90°C, before transferring the batch to a glass bottle.

### Synthesis of Example 7 (Comparative)

62.70 g of NB3043, 25.90 g of group II/III oil, 27.90 g of MM (70% in Nexbase 3020), 8.58 g of IDMA, 1.20 g of LMA, 22.00 g of SMA, 0.20 g of styrene, 45.40 g of BMA and 0.20 g of MMA were placed in a 4-necked glass flask equipped with a stirrer, temperature sensor and nitrogen pipe as well as a reflux condenser. The flask was flushed with nitrogen and heated to 90°C. Afterwards, 1.16 g of 10% solution of tert-butylperoxy-2-ethylhexanoate in NB3043 was added to start the reaction and a mixture consisting of 0.10 g of MM (70% in NB 3020), 8.58 g of IDMA, 1.20 g of LMA, 22.00 g of SMA, 0.20 g of styrene, 45.40 g of BMA, 0.60 g of MMA, 57.10 g of NB3043 and 20.80 g of group II/III oil was added over a period of 180 minutes. Simultaneously, a second mixture of 0.27 g tert-butylperoxy-2-ethylhexanoate and 2.46 g NB3043 was added over a period of 240 minutes.

240 minutes after start of the reaction, another 87.50 g of NB3043 were added over a period of 120 minutes. Simultaneously, a mixture of 0.35 g tert-butylperoxy-2-ethylhexanoate and 3.15 g NB3043 were added over a period of 180 minutes.

The mixture was stirred over night at 90°C. The following day, 256.90 g of NB3043 were added to the flask and stirred for approximately 90 minutes at 90°C, before transferring the batch to a glass bottle.

### Synthesis of Example 8 (Comparative)

62.70 g of NB3043, 25.90 g of group II/III oil, 27.90 g of MM (70% in Nexbase 3020), 12.87 g of IDMA, 1.20 g of LMA, 22.00 g of SMA, 0.10 g of styrene, 41.10 g of BMA and 0.20 g of MMA were placed in a 4-necked glass flask equipped with a stirrer, temperature sensor and nitrogen pipe as well as a reflux condenser. The flask was flushed with nitrogen and heated to 90°C. Afterwards, 1.16 g of 10% solution of tert-butylperoxy-2-ethylhexanoate in NB3043 was added to start the reaction and a mixture consisting of 0.10 g of MM (70% in NB 3020), 12.87 g of IDMA, 1.20 g of LMA, 22.00 g of SMA, 0.20 g of styrene, 41.10 g of BMA, 0.60 g of MMA, 57.10 g of NB3043 and 20.90 g of group II/III oil was added over a period of 180 minutes. Simultaneously, a second mixture of 0.27 g tert-butylperoxy-2-ethylhexanoate and 2.46 g NB3043 was added over a period of 240 minutes.

240 minutes after start of the reaction, another 87.50 g of NB3043 were added over a period of 120 minutes. Simultaneously, a mixture of 0.35 g tert-butylperoxy-2-ethylhexanoate and 3.15 g NB3043 were added over a period of 180 minutes.

The mixture was stirred over night at 90°C. The following day, 256.90 g of NB3043 were added to the flask and stirred for approximately 90 minutes at 90°C, before transferring the batch to a glass bottle.

### Synthesis of Example 9 (Comparative)

65.30 g of NB3043, 26.90 g of group II/III oil, 27.90 g of MM (70% in Nexbase 3020), 13.60 g of LMA, 7.00 g of C16-18 AA, 0.10 g of styrene, 60.00 g of BMA and 0.30 g of MMA were placed in a 4-necked glass flask equipped with a stirrer, temperature sensor and nitrogen pipe as well as a reflux condenser. The flask was flushed with nitrogen and heated to 90 °C. Afterwards, 1.20 g of 10% solution of tert-butylperoxy-2-ethylhexanoate in NB3043 was added to start the reaction and a mixture consisting of 0.10 g of MM (70% in NB 3020), 13.60 g of LMA, 0.20 g of styrene, 60.00 g of BMA, 0.60 g of MMA, 54.50 g of NB3043 and 19.90 g of group II/III oil was added over a period of 180 minutes. Simultaneously, a second mixture of 0.26 g tert-butylperoxy-2-ethylhexanoate and 2.35 g NB3043 was added over a period of 240 minutes.

240 minutes after start of the reaction, another 87.50 g of NB3043 were added over a period of 120 minutes. Simultaneously, a mixture of 0.35 g tert-butylperoxy-2-ethylhexanoate and 3.15 g NB3043 were added over a period of 180 minutes.

The mixture was stirred over night at 90°C. The following day, 257.00 g of NB3043 were added to the flask and stirred for approximately 90 minutes at 90°C, before transferring the batch to a glass bottle.

### Synthesis of Example 10

62.80 g of NB3043, 26.00 g of Group II/III oil, 28.40 g of MM (70% in Nexbase 3020), 10.63 g of IDMA, 10.10 g of LMA, 7.40 g of SMA, 0.10 g of styrene, 49.00 g of BMA and 0.20 g of MMA were placed in a 4-necked glass flask equipped with a stirrer, temperature sensor and nitrogen pipe as well as a reflux condenser. The flask was flushed with nitrogen and heated to 90°C. Afterwards, 1.95 g of 10% solution of tert-butylperoxy-2-ethylhexanoate in NB3043 was added to start the reaction and a mixture consisting of 0.10 g of MM (70% in NB 3020), 10.63 g of IDMA, 10.10 g of LMA, 7.40 g of SMA, 0.30 g of styrene, 49.00 g of BMA, 0.20 g of MMA, 0.16 g tert-butylperoxy-2-ethylhexanoate in 1.40 g of NB3043, 56.90 g of NB3043 and 20.80 g of group II/III oil was added over a period of 180 minutes.

240 minutes after start of the reaction, another 87.50 g of NB3043 with 0.35 g tert-butylperoxy-2-ethylhexanoate in 3.15 g NB3043 were added over a period of 180 minutes. 120 minutes after the addition, 0.35 g tert-butylperoxy-2-ethylhexanoate was added.

The mixture was stirred over night at 90°C. The following day, 256.20 g of NB3043 were added to the flask and stirred for approximately 90 minutes at 90°C, before transferring the batch to a glass bottle.

### Synthesis of Example 11

63.20 g of NB3043, 25.00 g of group II/III oil, 17.40 g of MM (70% in Nexbase 3020), 10.11 g of IDMA, 5.30 g of LMA, 12.20 g of SMA, 0.10 g of styrene, 53.40 g of BMA and 0.20 g of MMA were placed in a 4-necked glass flask equipped with a stirrer, temperature sensor and nitrogen pipe as well as a reflux condenser. The flask was flushed with nitrogen and heated to 90°C. Afterwards, 1.87 g of 10% solution of tert-butylperoxy-2-ethylhexanoate in NB3043 was added to start the reaction and a mixture consisting of 0.10 g of MM (70% in NB 3020), 10.11 g of IDMA, 5.30 g of LMA, 12.30 g of SMA, 0.30 g of styrene, 53.40 g of BMA, 0.20 g of MMA, 0.16 g tert-butylperoxy-2-ethylhexanoate in 1.47 g of NB3043, 59.70 g of NB3043 and 21.80 g of group II/III oil was added over a period of 180 minutes.

240 minutes after start of the reaction, another 87.50 g of NB3043 with 0.35 g tert-butylperoxy-2-ethylhexanoate in 3.15 g NB3043 were added over a period of 180 minutes. 120 minutes after the addition, 0.35 g tert-butylperoxy-2-ethylhexanoate was added.

The mixture was stirred over night at 90°C. The following day, 256.20 g of NB3043 were added to the flask and stirred for approximately 90 minutes at 90°C, before transferring the batch to a glass bottle.

### Synthesis of Example 12

47.80 g of NB3043, 40.30 g of group II/III oil, 17.40 g of MM (70% in Nexbase 3020), 21.87 g of IDMA, 5.30 g of LMA, 12.20 g of SMA, 0.10 g of styrene, 53.40 g of BMA and 0.20 g of MMA were placed in a 4-necked glass flask equipped with a stirrer, temperature sensor and nitrogen pipe as well as a reflux condenser. The flask was flushed with nitrogen and heated to 90°C. Afterwards, 1.87 g of 10% solution of tert-butylperoxy-2-ethylhexanoate in NB3043 was added to start the reaction and a mixture consisting of 0.10 g of MM (70% in NB 3020), 10.11 g of IDMA, 5.30 g of LMA, 12.30 g of SMA, 0.30 g of styrene, 53.40 g of BMA, 0.20 g of MMA, 0.16 g tert-butylperoxy-2-ethylhexanoate in 1.47 g of NB3043, 59.70 g of NB3043 and 21.80 g of group II/III oil was added over a period of 180 minutes.

240 minutes after start of the reaction, another 87.50 g of NB3043 with 0.35 g tert-butylperoxy-2-ethylhexanoate in 3.15 g NB3043 were added over a period of 180 minutes. 120 minutes after the addition, 0.35 g tert-butylperoxy-2-ethylhexanoate was added.

The mixture was stirred over night at 90°C. The following day, 256.20 g of NB3043 were added to the flask and stirred for approximately 90 minutes at 90°C, before transferring the batch to a glass bottle.

### Synthesis of Example 13

61.39 g of NB3043, 25.46 g of group II/III oil, 22.41 g of MM (70% in Nexbase 3020), 0.17 g of LMA, 17.32 g of SMA, 7.33 g of IDMA, 0.12 g of styrene, 53.03 g of BMA and 0.15 g of MMA were placed in a 4-necked glass flask equipped with a stirrer, temperature sensor and nitrogen pipe as well as a reflux condenser. The flask was flushed with nitrogen and heated to 90°C. Afterwards, 1.00 g of 10% solution of tert-butylperoxy-2-ethylhexanoate in NB3043 was added to start the reaction and a mixture consisting of 0.09 g of MM (70% in NB 3020), 0.18 g of LMA, 17.32 g of SMA, 8.75 g of IDMA, 0.23 g of styrene, 53.03 g of BMA, 0.19 g of MMA, 55.91 g of NB3043 and 21.34 g of group II/III oil was added over a period of 180 minutes. Simultaneously, a second mixture of 0.28 g tert-butylperoxy-2-ethylhexanoate and 2.51 g NB3043 was added over a period of 240 minutes.

240 minutes after start of the reaction, another 86.83 g of NB3043 with 0.35 g of tert-butylperoxy-2-ethylhexanoate were added over a period of 90 minutes.

The mixture was stirred over night at 90°C. The following day, 260.49 g of NB3043 were added to the flask and stirred for approximately 90 minutes at 90°C, before transferring the batch to a glass bottle.

### Synthesis of Example 14

61.39 g of NB3043, 25.46 g of group II/III oil, 22.42 g of MM (70% in Nexbase 3020), 0.17 g of LMA, 17.32 g of SMA, 10.99 g of IDMA, 0.12 g of styrene, 48.64 g of BMA and 0.15 g of MMA were placed in a 4-necked glass flask equipped with a stirrer, temperature sensor and nitrogen pipe as well as a reflux condenser. The flask was flushed with nitrogen and heated to 90°C. Afterwards, 1.00 g of 10% solution of tert-butylperoxy-2-ethylhexanoate in NB3043 was added to start the reaction and a mixture consisting of 0.07 g of MM (70% in NB 3020), 0.18 g of LMA, 17.33 g of SMA, 13.13 g of IDMA, 0.23 g of styrene, 48.66 g of BMA, 0.19 g of MMA, 55.91 g of NB3043 and 21.34 g of group II/III oil was added over a period of 180 minutes. Simultaneously, a second mixture of 0.28 g tert-butylperoxy-2-ethylhexanoate and 2.51 g NB3043 was added over a period of 240 minutes.

240 minutes after start of the reaction, another 86.85 g of NB3043 with 0.35 g of tert-butylperoxy-2-ethylhexanoate were added over a period of 90 minutes.

The mixture was stirred over night at 90°C. The following day, 259.95 g of NB3043 were added to the flask and stirred for approximately 90 minutes at 90°C, before transferring the batch to a glass bottle.

### Synthesis of Example 15

61.39 g of NB3043, 25.46 g of group II/III oil, 22.41 g of MM (70% in Nexbase 3020), 5.25 g of LMA, 12.25 g of SMA, 7.33 g of IDMA, 0.12 g of styrene, 53.03 g of BMA and 0.15 g of MMA were placed in a 4-necked glass flask equipped with a stirrer, temperature sensor and nitrogen pipe as well as a reflux condenser. The flask was flushed with nitrogen and heated to 90°C. Afterwards, 1.00 g of 10% solution of tert-butylperoxy-2-ethylhexanoate in NB3043 was added to start the reaction and a mixture consisting of 0.09 g of MM (70% in NB 3020), 5.25 g of LMA, 12.25 g of SMA, 8.75 g of IDMA, 0.23 g of styrene, 53.03 g of BMA, 0.19 g of MMA, 55.91 g of NB3043 and 21.34 g of group II/III oil was added over a period of 180 minutes. Simultaneously, a second mixture of 0.28 g tert-butylperoxy-2-ethylhexanoate and 2.51 g NB3043 was added over a period of 240 minutes.

240 minutes after start of the reaction, another 86.83 g of NB3043 with 0.35 g of tert-butylperoxy-2-ethylhexanoate were added over a period of 90 minutes.

The mixture was stirred over night at 90°C. The following day, 260.49 g of NB3043 were added to the flask and stirred for approximately 90 minutes at 90°C, before transferring the batch to a glass bottle.

### Synthesis of Example 16

61.39 g of NB3043, 25.46 g of group II/III oil, 22.42 g of MM (70% in Nexbase 3020), 5.25 g of LMA, 12.25 g of SMA, 10.99 g of IDMA, 0.12 g of styrene, 48.64 g of BMA and 0.15 g of MMA were placed in a 4-necked glass flask equipped with a stirrer, temperature sensor and nitrogen pipe as well as a reflux condenser. The flask was flushed with nitrogen and heated to 90°C. Afterwards, 1.00 g of 10% solution of tert-butylperoxy-2-ethylhexanoate in NB3043 was added to start the reaction and a mixture consisting of 0.07 g of MM (70% in NB 3020), 5.25 g of LMA, 12.25 g of SMA, 13.13 g of IDMA, 0.23 g of styrene, 48.66 g of BMA, 0.19 g of MMA, 55.91 g of NB3043 and 21.34 g of group II/III oil was added over a period of 180 minutes. Simultaneously, a second mixture of 0.28 g tert-butylperoxy-2-ethylhexanoate and 2.51 g NB3043 was added over a period of 240 minutes.

240 minutes after start of the reaction, another 86.65 g of NB3043 with 0.35 g of tert-butylperoxy-2-ethylhexanoate were added over a period of 90 minutes.

The mixture was stirred over night at 90°C. The following day, 259.95 g of NB3043 were added to the flask and stirred for approximately 90 minutes at 90°C, before transferring the batch to a glass bottle.

### Synthesis of Example 17

86.89 g of 100N oil, 22.41 g of MM (70% in Nexbase 3020), 0.17 g of LMA, 17.32 g of SMA, 1.67 g of IDMA, 0.12 g of styrene, 60.12 g of BMA and 0.15 g of MMA were placed in a 4-necked glass flask equipped with a stirrer, temperature sensor and nitrogen pipe as well as a reflux condenser. The flask was flushed with nitrogen and heated to 90°C. Afterwards, 1.00 g of 10% solution of tert-butylperoxy-2-ethylhexanoate in 100N oil was added to start the reaction and a mixture consisting of 0.09 g of MM (70% in NB 3020), 0.18 g of LMA, 17.32 g of SMA, 1.66 g of IDMA, 0.23 g of styrene, 60.12 g of BMA, 0.19 g of MMA, 77.25 g of 100N oil was added over a period of 180 minutes. Simultaneously, a second mixture of 0.28 g tert-butylperoxy-2-ethylhexanoate and 2.51 g NB3043 was added over a period of 240 minutes.

240 minutes after start of the reaction, another 87.20 g of 100N oil with 0.35 g of tert-butylperoxy-2-ethylhexanoate were added over a period of 90 minutes.

The mixture was stirred over night at 90°C. The following day, 261.59 g of 100N oil were added to the flask and stirred for approximately 90 minutes at 90°C, before transferring the batch to a glass bottle.

### Synthesis of Example 18

86.89 g of 100N oil, 24.94 g of MM (70% in Nexbase 3020), 0.18 g of LMA, 17.51 g of SMA, 1.68 g of IDMA, 0.13 g of styrene, 58.11 g of BMA and 0.16 g of MMA were placed in a 4-necked glass flask equipped with a stirrer, temperature sensor and nitrogen pipe as well as a reflux condenser. The flask was flushed with nitrogen and heated to 90°C. Afterwards, 1.00 g of 10% solution of tert-butylperoxy-2-ethylhexanoate in 100N oil was added to start the reaction and a mixture consisting of 5.26 g of MM (70% in NB 3020), 0.18 g of LMA, 17.10 g of SMA, 1.64 g of IDMA, 0.22 g of styrene, 56.76 g of BMA, 0.19 g of MMA, 77.20 g of 100N oil was added over a period of 180 minutes. Simultaneously, a second mixture of 0.28 g tert-butylperoxy-2-ethylhexanoate and 2.56 g NB3043 was added over a period of 240 minutes.

240 minutes after start of the reaction, another 87.78 g of 100N oil with 0.35 g of tert-butylperoxy-2-ethylhexanoate were added over a period of 90 minutes.

The mixture was stirred over night at 90°C. The following day, 263.34 g of 100N oil were added to the flask and stirred for approximately 90 minutes at 90°C, before transferring the batch to a glass bottle.

### Synthesis of Example 19

86.89 g of 100N oil, 24.67 g of MM (70% in Nexbase 3020), 0.17 g of LMA, 17.16 g of SMA, 1.65 g of IDMA, 0.15 g of styrene, 58.67 g of BMA and 0.15 g of MMA were placed in a 4-necked glass flask equipped with a stirrer, temperature sensor and nitrogen pipe as well as a reflux condenser. The flask was flushed with nitrogen and heated to 90°C. Afterwards, 1.00 g of 10% solution of tert-butylperoxy-2-ethylhexanoate in 100N oil was added to start the reaction and a mixture consisting of 0.09 g of MM (70% in NB 3020), 0.18 g of LMA, 17.52 g of SMA, 1.68 g of IDMA, 0.20 g of styrene, 59.92 g of BMA, 0.20 g of MMA, 77.25 g of 100N oil was added over a period of 180 minutes. Simultaneously, a second mixture of 0.28 g tert-butylperoxy-2-ethylhexanoate and 2.51 g NB3043 was added over a period of 240 minutes.

240 minutes after start of the reaction, another 87.36 g of 100N oil with 0.35 g of tert-butylperoxy-2-ethylhexanoate were added over a period of 90 minutes.

The mixture was stirred over night at 90°C. The following day, 262.09 g of 100N oil were added to the flask and stirred for approximately 90 minutes at 90°C, before transferring the batch to a glass bottle.

### Synthesis of Example 20

86.89 g of 100N oil, 26.91 g of MM (70% in Nexbase 3020), 0.17 g of LMA, 17.01 g of SMA, 1.63 g of IDMA, 0.13 g of styrene, 57.30 g of BMA and 0.15 g of MMA were placed in a 4-necked glass flask equipped with a stirrer, temperature sensor and nitrogen pipe as well as a reflux condenser. The flask was flushed with nitrogen and heated to 90°C. Afterwards, 1.00 g of 10% solution of tert-butylperoxy-2-ethylhexanoate in 100N oil was added to start the reaction and a mixture consisting of 0.09 g of MM (70% in NB 3020), 0.18 g of LMA, 17.72 g of SMA, 1.70 g of IDMA, 0.22 g of styrene, 59.69 g of BMA, 0.20 g of MMA, 77.25 g of 100N oil was added over a period of 180 minutes. Simultaneously, a second mixture of 0.28 g tert-butylperoxy-2-ethylhexanoate and 2.51 g NB3043 was added over a period of 240 minutes.

240 minutes after start of the reaction, another 87.54 g of 100N oil with 0.35 g of tert-butylperoxy-2-ethylhexanoate were added over a period of 90 minutes.

The mixture was stirred over night at 90°C. The following day, 262.61 g of 100N oil were added to the flask and stirred for approximately 90 minutes at 90°C, before transferring the batch to a glass bottle.

The compositions of the resulting polyalkyl (meth)acrylate-based polymers are summarized in the following Table 1.

**Table 1: Compositions of the polyalkyl (meth)acrylate-based polymers prepared according to the present invention.**

| **Example #** | **MM [%]** | **MMA [%]** | **BMA [%]** | **IDMA [%]** | **LMA [%]** | **SMA [%]** | **Styrene [%]** |
|---|---|---|---|---|---|---|---|
| **1** | 11.2 | 0.5 | 68.5 | -- | 8.4 | 11.2 | 0.2 |
| **2** | 11.2 | 0.5 | 68.5 | -- | 0.6 | 19.0 | 0.2 |
| **3** | 11.4 | 0.5 | 67.9 | -- | 13.2 | 6.8 | 0.2 |
| **4** | 9.0 | 0.2 | 60.6 | 10.0 | 0.6 | 19.4 | 0.2 |
| **5** | 11.2 | 0.5 | 68.5 | -- | 14.8 | 4.8 | 0.2 |
| | | | | | | | |
| **6 (CE)** | 11.2 | 0.5 | 61.6 | -- | 1.4 | 25.1 | 0.2 |
| **7 (CE)** | 11.2 | 0.5 | 51.8 | 9.8 | 1.4 | 25.1 | 0.2 |
| **8 (CE)** | 11.2 | 0.5 | 46.9 | 14.7 | 1.4 | 25.1 | 0.2 |
| **9 (CE)** | 11.2 | 0.5 | 68.5 | -- | 15.6 | 4.0*⁾ | 0.2 |
| | | | | | | | |
| **10** | 11.4 | 0.2 | 56.0 | 12.2 | 11.5 | 8.5 | 0.2 |
| **11** | 7.0 | 0.2 | 61.0 | 11.6 | 6.0 | 14.0 | 0.2 |
| **12** | 7.0 | 0.2 | 56.0 | 16.6 | 6.0 | 14.0 | 0.2 |
| **13** | 9.0 | 0.2 | 60.6 | 10.0 | 0.2 | 19.8 | 0.2 |
| **14** | 9.0 | 0.2 | 55.6 | 15.0 | 0.2 | 19.8 | 0.2 |
| **15** | 9.0 | 0.2 | 60.6 | 10.0 | 6.0 | 14.0 | 0.2 |
| **16** | 9.0 | 0.2 | 55.6 | 15.0 | 6.0 | 14.0 | 0.2 |
| **17** | 9.0 | 0.2 | 68.7 | 1.9 | 0.2 | 19.8 | 0.2 |
| **18** | 12.0 | 0.2 | 65.7 | 1.9 | 0.2 | 19.8 | 0.2 |
| **19** | 10.0 | 0.2 | 67.7 | 1.9 | 0.2 | 19.8 | 0.2 |
| **20** | 11.0 | 0.2 | 66.7 | 1.9 | 0.2 | 19.8 | 0.2 |

| | | | | | | | |
|---|---|---|---|---|---|---|---|
| *⁾ C16/18 alkyl acrylate was used instead of stearyl methacrylate CE = comparative example | | | | | | | |

If not otherwise stated, the term "%" means wt.% (% by weight).

Examples 1-5 and 10-20 are in accordance with the present invention. Examples 6-8 are comparative examples as they comprise SMA contents which are higher than the claimed ranges. Example 9 is a comparative example as it comprises C16/18 alkyl acrylate instead of alkyl methacrylate.

Typical characteristics of the resulting polyalkyl (meth)acrylate-based polymers like weight-average molecular weights M_{w}, number-average molecular weights Mₙ, and their polydispersity indices (PDIs) are summarized in the following Table 2.

**Table 2: Typical characteristics of the polyalkyl (meth)acrylate-based polymers of the present invention:**

| **Example #** | **M_{w}** | **Mₙ** | **PDI** |
|---|---|---|---|
| | **[g/mol]** | **[g/mol]** | |
| **1** | 740,000 | 150,000 | 5.0 |
| **2** | 772,000 | 144,000 | 5.4 |
| **3** | 688,000 | 152,000 | 4.5 |
| **4** | 731,000 | 140,000 | 5.2 |
| **5** | 511,000 | 131,000 | 3.9 |
| | | | |
| **6 (CE)** | 738,000 | 119,000 | 6.2 |
| **7 (CE)** | 744,000 | 127,000 | 5.9 |
| **8 (CE)** | 735,000 | 126,000 | 5.8 |
| **9 (CE)** | 620,000 | 125,000 | 5.0 |
| | | | |
| **10** | 585,000 | 139,000 | 4.2 |
| **11** | 586,000 | 140,000 | 4.2 |
| **12** | 559,000 | 129,000 | 4.3 |
| **13** | 791,000 | 127,000 | 6.2 |
| **14** | 751,000 | 132,000 | 5.7 |
| **15** | 686,000 | 130,000 | 5.3 |
| **16** | 644,000 | 128,000 | 5.0 |
| **17** | 829,000 | 142,000 | 5.9 |
| **18** | 870,000 | 134,000 | 6.5 |
| **19** | 812,000 | 138,000 | 5.9 |
| **20** | 815,000 | 138,000 | 5.9 |

| | | | |
|---|---|---|---|
| CE = comparative example | | | |

The examples according to the present invention showed weight-average molecular weights in the range of 511,000 g/mol (example 5) and 870,000 g/mol (example 18).

### Evaluation of VI improvers in formulations

To demonstrate the effect of the polyalkyl(methacrylate)-based polymers according to the present invention on the performance of lubricating oil compositions, different formulation examples A were prepared and the corresponding values are measured. Formulations with API Group II 100N oil (e.g. aramcoPRIMA) and API Group II 220N (e.g. Chevron 220R) as base oil were prepared with a fixed amount of Dl-package and viscosity modifier concentrations as outlined in the following Table 3. The formulations were targeted to meet the following industry standards / specifications: 5W-30 (SAE J300), 75W-80 (SAE J306), John Deere JD 20 C, Caterpillar TO-4 SAE 30.

The combined formulation targets are outlined in the second column in the following Table 4. The resulting viscosity-modifying additive content was typically between 8 and 12% by weight. Characteristic EO/UTTO formulation properties (KV40, KV100, HTHS150, Brookfield -40, MRV TP1-35, CCS-30 and KV100 (sheared)) were measured and are summarized in Table 3.

**Table 3a: 0W20 engine oil formulations including DI package in base oil mixtures.**

| **Formulation** | **unit** | **limit** | **A1** | **A2** | **A3** | **A4** | **A5** | **A6 (CE)** | **A7 (CE)** | **A8 (CE)** | **A9 (CE)** |
|---|---|---|---|---|---|---|---|---|---|---|---|
| | | | | | | | | | | | |
| **Example 1** | [%] | | 9.2 | -- | -- | -- | -- | -- | -- | -- | -- |
| **Example 2** | [%] | | -- | 9.00 | -- | -- | -- | -- | -- | -- | -- |
| **Example 3** | [%] | | -- | -- | 9.7 | -- | -- | -- | -- | -- | -- |
| **Example 4** | [%] | | -- | -- | -- | 8.04 | -- | -- | -- | -- | -- |
| **Example 5** | [%] | | -- | -- | -- | -- | 11.32 | -- | -- | -- | -- |
| **Example 6 (CE)** | [%] | | -- | -- | -- | -- | -- | 7.53 | -- | -- | -- |
| **Example 7 (CE)** | [%] | | -- | -- | -- | -- | -- | -- | 6.74 | -- | -- |
| **Example 8 (CE)** | [%] | | -- | -- | -- | -- | -- | -- | -- | 6.36 | -- |
| **Example 9 (CE)** | [%] | | -- | -- | -- | -- | -- | -- | -- | -- | 10.24 |
| **Additive package (DI package)** | [%] | | 6.40 | 6.40 | 6.40 | 6.40 | 6.40 | 6.40 | 6.40 | 6.40 | 6.40 |
| **Group II oil (100N)** | [%] | | 36.9 | 37.1 | 36.4 | 38.06 | 34.78 | 38.57 | 39.36 | 39.74 | 35.86 |
| **Chevron 220R** | [%] | | 47.5 | 47.5 | 47.5 | 47.5 | 47.5 | 47.5 | 47.5 | 47.5 | 47.5 |
| **Sum** | [%] | | 100.00 | 100.00 | 100.00 | 100.00 | 100.00 | 100.00 | 100.00 | 100.00 | 100.00 |
| | | | | | | | | | | | |
| **polymer content** | [%] | | 2.30 | 2.25 | 2.43 | 2.01 | 2.83 | 1.88 | 1.69 | 1.59 | 2.56 |
| | | | | | | | | | | | |
| **KV40 (fresh oil)** | [mm²/s] | | 36.52 | 37.16 | 36.52 | 39.03 | 37.40 | 40.55 | 43.97 | 45.98 | 37.84 |
| **KV100 (fresh oil)** | [mm²/s] | 9.3-11.0 | 9.80 | 9.95 | 9.91 | 10.00 | 9.90 | 9.93 | 9.82 | 9.87 | 9.96 |
| **VI** | | | 270 | 270 | 275 | 257 | 267 | 244 | 218 | 208 | 265 |
| **Yield Stress** | [Pas] | | <35 | <35 | <35 | <35 | <35 | <35 | <35 | <35 | <35 |
| **PP** | [°C] | min. -36 | -42 | -42 | -36 | -45 | -42 | -42 | -45 | -48 | -27 |
| **Brookfield @-40°C** | [mPas] | max. 150,000 | 150,000 | 124,000 | 146,000 | 102,000 | 132,000 | 164,000 | 89,000 | 63,000 | Solid |
| **CCS@-30** | [mPas] | max. 6,600 | 6306 | 6308 | 6265 | 6302 | 6310 | 6644 | 6739 | 6761 | 6734 |
| **MRV TP1 @-35°C dyn. viscosity** | [mPas] | max. 60,000 | 13,500 | 13,200 | 14,000 | 13,500 | 13,600 | 13,700 | 13,800 | 13,900 | 17,800 |
| **KV100 (sheared, KRL)** | [mm²/s] | > 7.1 | 7.40 | 7.15 | 7.49 | | 7.68 | 6.33 | 6.10 | 6.06 | 7.71 |
| | | | | | | | | | | | |
| **KV100 (sheared, Bosch)** | [mm²/s] | > 9.3 | 9.73 | 9.83 | 9.87 | 9.47 | 9.82 | 9.03 | 8.03 | 7.73 | 9.91 |
| **PSSI 100** | | | 1.6 | 2.6 | 1.0 | 11.6 | 1.7 | 20.2 | 40.9 | 48.3 | 1.2 |

**Table 3b: 0W20 engine oil formulations including DI package in base oil mixtures.**

| **Formulation** | **unit** | **limit** | **A10** | **A11** |
|---|---|---|---|---|
| | | | | |
| **Example 18** | [%] | | 7.70 | -- |
| **Example 20** | [%] | | -- | 7.90 |
| **Additive package (DI package)** | [%] | | 6.40 | 6.40 |
| **Group II oil (100N)** | [%] | | 38.40 | 38.20 |
| **Chevron 220R** | [%] | | 47.50 | 47.50 |
| **Sum** | [%] | | 100.00 | 100.00 |
| | | | | |
| **polymer content** | [%] | | 1.93 | 1.98 |
| | | | | |
| **KV40 (fresh oil)** | [mm²/s] | | 37.84 | 37.69 |
| **KV100 (fresh oil)** | [mm²/s] | 9.3-11.0 | 9.85 | 9.93 |
| **VI** | | | 261 | 265 |
| **Yield Stress** | [Pas] | | <35 | <35 |
| **PP** | [°C] | min. -36 | -42 | -45 |
| **Brookfield @-40°C** | [mPas] | max. 150,000 | 108,000 | 130,000 |
| **CCS@-30** | [mPas] | max. 6,600 | 6040 | 6006 |
| **MRV TP1 @-35°C dyn. viscosity** | [mPas] | max. 60,000 | 13,900 | 13,500 |
| **KV100 (sheared, KRL)** | [mm²/s] | > 7.1 | 7.37 | 7.89 |
| | | | | |
| **KV100 (sheared, Bosch)** | [mm²/s] | > 9.3 | 9.78 | 9.92 |
| **PSSI 100** | | | 1.47 | 0.29 |

The results presented in Tables 3a and 3b clearly show that only lubricating oil compositions comprising the polymers according to the present invention can meet the stringent requirements posed by combining several industry specifications. They exhibit good wax control (pour point) and excellent low temperature performance (low Brookfield), while maintaining very good shear stability. Examples A1-A5 comprising polymer examples 1-5 achieved pour points of at least -36°C and CCS values of below 6,600 mPas. The KV100 values for formulations A1-A5 were well above the targeted 9.3 mm²/s after 30 cycles Bosch-injector shear meeting the requirements for SAE J300. They also met the more stringent after-shear requirements of KV100 > 7.1 mm²/s, which are needed to fulfill SAE J306 requirement for 75W-80 formulations or to meet the JD20C specification. Comparative examples A6-A8 showed considerably poorer CCS viscosities despite using the same ratio of heavy base oil. PSSI and after-shear KV100 values were significantly poorer and not meeting the stringent demands.

The use of polymer example 9, wherein C16/18 alkyl acrylate was used instead of C16/18 alkyl methacrylate (see example 5), led to a formulation A9 which passed the shear stability requirements, but which could not fulfill the low temperature requirements. The pour point was only -27°C and the formulation was solid at -40°C, i.e. no Brookfield viscosity at -40°C could be measured.

## Claims

1. Polyalkyl(meth)acrylate-based polymers, consisting of the following monomers:
(a) 6 wt.% to 12 wt.% of esters of (meth)acrylic acid and a hydroxylated hydrogenated polybutadiene;
(b) 0 wt.% to 1 wt.% of methyl methacrylate;
(c) 45 wt.% to 70 wt.% of n-butyl methacrylate;
(d) 0 wt.% to 20 wt.% of C5-11 alkyl methacrylates;
(e) 0.2 wt.% to 18 wt.% of C12-15 alkyl methacrylates, preferably LMA;
(f) 2 wt.% to 19.8 wt.% of C16-20 alkyl methacrylates, preferably SMA; and
(g) 0 wt.% to 1 wt.% of styrene monomers,
wherein the sum of components (e) and (f) is equal to or less than 20 wt.%.

2. Polyalkyl(meth)acrylate-based polymers according to claim 1, wherein the weight-average molecular weight is in the range of 100,000 g/mol to 1,000,000 g/mol, more preferably in the range of 300,000 g/mol to 900,000 g/mol and especially preferred in the range of 500,000 g/mol to 900,000 g/mol.

3. Additive composition, comprising:
(A) 60 wt.% to 80 wt.% of a base oil, and
(B) 20 wt.% to 40 wt.% of a polyalkyl(meth)acrylate-based polymer, consisting of the following monomers:
(a) 6 wt.% to 12 wt.% of esters of (meth)acrylic acid and a hydroxylated hydrogenated polybutadiene;
(b) 0 wt.% to 1 wt.% of methyl methacrylate;
(c) 45 wt.% to 70 wt.% of n-butyl methacrylate;
(d) 0 wt.% to 20 wt.% of C5-11 alkyl methacrylates;
(e) 0.2 wt.% to 18 wt.% of C12-15 alkyl methacrylates, preferably LMA;
(f) 2 wt.% to 19.8 wt.% of C16-20 alkyl methacrylates, preferably SMA; and
(g) 0 wt.% to 1 wt.% of styrene monomers,
wherein the sum of components (e) and (f) is equal to or less than 20 wt.%.

4. Additive composition according to claim 3, comprising 70 wt.% to 75 wt.% of component (A) and 25 wt.% to 30 wt.% of component (B).

5. Lubricating oil composition, comprising:
(A) 75 to 99.5% by weight of a base oil;
(B) 0.5 to 10% by weight of a polyalkyl(meth)acrylate-based polymer, consisting of the following monomers:
(a) 6 wt.% to 12 wt.% of esters of (meth)acrylic acid and a hydroxylated hydrogenated polybutadiene;
(b) 0 wt.% to 1 wt.% of methyl methacrylate;
(c) 45 wt.% to 70 wt.% of n-butyl methacrylate;
(d) 0 wt.% to 20 wt.% of C5-11 alkyl methacrylates;
(e) 0.2 wt.% to 18 wt.% of C12-15 alkyl methacrylates, preferably LMA;
(f) 2 wt.% to 19.8 wt.% of C16-20 alkyl methacrylates, preferably SMA; and
(g) 0 wt.% to 1 wt.% of styrene monomers
wherein the sum of components (e) and (f) is equal to or less than 20 wt.%, and
(C) 0 to 15% by weight of one or more further additives.

6. Lubricating oil composition according to claim 5, wherein the one or more further additives (C) are selected from the group consisting of conventional VI improvers, dispersants, defoamers, detergents, antioxidants, pour point depressants, antiwear additives, extreme pressure additives, friction modifiers, anticorrosion additives, dyes and mixtures thereof.

## Patentansprüche

1. Polymere auf Polyalkyl(meth)acrylatbasis, bestehend aus den folgenden Monomeren:
(a) 6 Gew.-% bis 12 Gew.-% an Estern von (Meth)acrylsäure und einem hydroxylierten hydrierten Polybutadien;
(b) 0 Gew.-% bis 1 Gew.-% Methylmethacrylat;
(c) 45 Gew.-% bis 70 Gew.-% n-Butylmethacrylat;
(d) 0 Gew.-% bis 20 Gew.-% an C5-11-Alkylmethacrylaten;
(e) 0,2 Gew.-% bis 18 Gew.-% an C12-15-Alkylmethacrylaten, vorzugsweise LMA;
(f) 2 Gew.-% bis 19,8 Gew.-% an C16-20-Alkylmethacrylaten, vorzugsweise SMA; und
(g) 0 Gew.-% bis 1 Gew.-% an Styrolmonomeren,
wobei die Summe der Komponenten (e) und (f) gleich oder kleiner als 20 Gew.-% ist.

2. Polymere auf Polyalkyl(meth)acrylatbasis gemäß Anspruch 1, wobei das gewichtsgemittelte Molekulargewicht in dem Bereich von 100.000 g/mol bis 1.000.000 g/mol, bevorzugter in dem Bereich von 300.000 g/mol bis 900.000 g/mol und besonders bevorzugt in dem Bereich von 500.000 g/mol bis 900.000 g/mol liegt.

3. Additivzusammensetzung umfassend:
(A) 60 Gew.-% bis 80 Gew.-% an einem Grundöl und
(B) 20 Gew.-% bis 40 Gew.-% an einem Polymer auf Polyalkyl(meth)acrylatbasis bestehend aus den folgenden Monomeren:
(a) 6 Gew.-% bis 12 Gew.-% an Estern von (Meth)acrylsäure und einem hydroxylierten hydrierten Polybutadien;
(b) 0 Gew.-% bis 1 Gew.-% Methylmethacrylat;
(c) 45 Gew.-% bis 70 Gew.-% n-Butylmethacrylat;
(d) 0 Gew.-% bis 20 Gew.-% an C5-11-Alkylmethacrylaten;
(e) 0,2 Gew.-% bis 18 Gew.-% an C12-15-Alkylmethacrylaten, vorzugsweise LMA;
(f) 2 Gew.-% bis 19,8 Gew.-% an C16-20-Alkylmethacrylaten, vorzugsweise SMA; und
(g) 0 Gew.-% bis 1 Gew.-% an Styrolmonomeren,
wobei die Summe der Komponenten (e) und (f) gleich oder kleiner als 20 Gew.-% ist.

4. Additivzusammensetzung gemäß Anspruch 3, umfassend 70 Gew.-% bis 75 Gew.-% an Komponente (A) und 25 Gew.-% bis 30 Gew.-% an Komponente (B).

5. Schmierölzusammensetzung umfassend:
(A) 75 bis 99,5 Gew.-% an einem Grundöl;
(B) 0,5 bis 10 Gew.-% an einem Polymer auf Polyalkyl(meth)acrylatbasis bestehend aus den folgenden Monomeren:
(a) 6 Gew.-% bis 12 Gew.-% an Estern von (Meth)acrylsäure und einem hydroxylierten hydrierten Polybutadien;
(b) 0 Gew.-% bis 1 Gew.-% Methylmethacrylat;
(c) 45 Gew.-% bis 70 Gew.-% n-Butylmethacrylat;
(d) 0 Gew.-% bis 20 Gew.-% an C5-11-Alkylmethacrylaten;
(e) 0,2 Gew.-% bis 18 Gew.-% an C12-15-Alkylmethacrylaten, vorzugsweise LMA;
(f) 2 Gew.-% bis 19,8 Gew.-% an C16-20-Alkylmethacrylaten, vorzugsweise SMA; und
(g) 0 Gew.-% bis 1 Gew.-% an Styrolmonomeren,
wobei die Summe der Komponenten (e) und (f) gleich oder kleiner als 20 Gew.-% ist, und
(C) 0 bis 15 Gew.-% an einem oder mehreren weiteren Additiven.

6. Schmierölzusammensetzung gemäß Anspruch 5, wobei das eine oder die mehreren weiteren Additive (C) ausgewählt sind aus der Gruppe bestehend aus herkömmlichen VI-Verbesserern, Dispergiermitteln, Entschäumern, Detergentien, Antioxidationsmitteln, Pour-Point-Senkern, Verschleißschutzadditiven, Extremdruckadditiven, Reibwertveränderern, Korrosionsschutzadditiven, Farbstoffen und Gemischen davon.

## Revendications

1. Polymères à base de (méth)acrylate de polyalkyle, constitués des monomères suivants :
(a) 6 % en poids à 12 % en poids d'esters d'acide (méth)acrylique et d'un polybutadiène hydrogéné hydroxylé ;
(b) 0 % en poids à 1 % en poids de méthacrylate de méthyle ;
(c) 45 % en poids à 70 % en poids de méthacrylate de n-butyle ;
(d) 0 % en poids à 20 % en poids de méthacrylates d'alkyle en C5-11 ;
(e) 0,2 % en poids à 18 % en poids de méthacrylates d'alkyle en C12-15, préférablement LMA ;
(f) 2 % en poids à 19,8 % en poids de méthacrylates d'alkyle en C16-20, préférablement SMA ; et
(g) 0 % en poids à 1 % en poids de monomères de styrène, la somme des composants (e) et (f) étant égale ou inférieure à 20 % en poids.

2. Polymères à base de (méth)acrylate de polyalkyle selon la revendication 1, le poids moléculaire moyen en poids étant dans la plage de 100 000 g/mole à 1 000 000 g/mole, plus préférablement dans la plage de 300 000 g/mole à 900 000 g/mole et notamment de manière préférée dans la plage de 500 000 g/mole à 900 000 g/mole.

3. Composition d'additif, comprenant :
(A) 60 % en poids à 80 % en poids d'une huile de base, et
(B) 20 % en poids à 40 % en poids d'un polymère à base de (méth)acrylate de polyalkyle, constitué des monomères suivants :
(a) 6 % en poids à 12 % en poids d'esters d'acide (méth)acrylique et d'un polybutadiène hydrogéné hydroxylé ;
(b) 0 % en poids à 1 % en poids de méthacrylate de méthyle ;
(c) 45 % en poids à 70 % en poids de méthacrylate de n-butyle ;
(d) 0 % en poids à 20 % en poids de méthacrylates d'alkyle en C5-11 ;
(e) 0,2 % en poids à 18 % en poids de méthacrylates d'alkyle en C12-15, préférablement LMA ;
(f) 2 % en poids à 19,8 % en poids de méthacrylates d'alkyle en C16-20, préférablement SMA ; et
(g) 0 % en poids à 1 % en poids de monomères de styrène, la somme des composants (e) et (f) étant égale ou inférieure à 20 % en poids.

4. Composition d'additif selon la revendication 3, comprenant 70 % en poids à 75 % en poids de composant (A) et 25 % en poids à 30 % en poids de composant (B).

5. Composition d'huile lubrifiante, comprenant :
(A) 75 à 99,5 % en poids d'une huile de base ;
(B) 0,5 à 10 % en poids d'un polymère à base de (méth)acrylate de polyalkyle, constitué des monomères suivants :
(a) 6 % en poids à 12 % en poids d'esters d'acide (méth)acrylique et d'un polybutadiène hydrogéné hydroxylé ;
(b) 0 % en poids à 1 % en poids de méthacrylate de méthyle ;
(c) 45 % en poids à 70 % en poids de méthacrylate de n-butyle ;
(d) 0 % en poids à 20 % en poids de méthacrylates d'alkyle en C5-11 ;
(e) 0,2 % en poids à 18 % en poids de méthacrylates d'alkyle en C12-15, préférablement LMA ;
(f) 2 % en poids à 19,8 % en poids de méthacrylates d'alkyle en C16-20, préférablement SMA ; et
(g) 0 % en poids à 1 % en poids de monomères de styrène la somme des composants (e) et (f) étant égale ou inférieure à 20 % en poids, et
(C) 0 à 15 % en poids d'un ou plusieurs additifs supplémentaires.

6. Composition d'huile lubrifiante selon la revendication 5, l'additif ou les additifs supplémentaires (C) étant choisi(s) dans le groupe constitué par des agents d'amélioration d'IV conventionnels, des dispersants, des antimousses, des détergents, des antioxydants, des agents d'abaissement du point d'écoulement, des additifs anti-usure, des additifs de pression extrême, des modificateurs de friction, des additifs anticorrosion, des colorants et des mélanges correspondants.
